# NEW EUROPEAN PATENT SPECIFICATION

(11) **EP 0 570 188 B2**
(45) Date of publication and mention of the opposition decision: **10.07.2002**
(45) Mention of the grant of the patent: 26.11.1997
(21) Application number: 93303618.8
(22) Date of filing: 11.05.1993
(51) Int. Cl.: B32B 27/32, B65D 75/36

(54) **PTP or blister packaging articles and packaging material therefor**
Blisterverpackungen und dafür geeignetes Verpackungsmaterial
Emballage du type blister et matériau d'emballage approprié

(30) Priority: 14.05.1992 JP 12149292; 29.01.1993 JP 1359593; 06.04.1993 JP 7959993
(43) Date of publication of application: 18.11.1993
(73) Proprietor: MITSUI CHEMICALS, INC., Tokyo (JP)
(72) Inventor: Yamamoto, Yohzoh, c/o Mitsui Petrochem. Ind., Ltd., Kuga-Gun, Yamaguchi 740 (JP); Ohsato, Shinji, c/o Mitsui Petrochem. Ind., Ltd., Kuga-Gun, Yamaguchi 740 (JP); Honma, Shiro, c/o Mitsui Petrochem. Ind., Ltd., Kuga-Gun, Yamaguchi 740 (JP)
(74) Representative: Cresswell, Thomas Anthony

(56) References cited:
- EP-A- 0 384 694
- EP-A- 0 436 372
- EP-A- 0 518 542
- EP-A- 0 524 802
- GB-A- 1 398 329
- JP-A- 2 196 832
- JP-A- 3 188 145
- JP-A- 4 276 253
- US-A- 4 869 938
- DATABASE WPI Week 9236, Derwent Publications Ltd., London, GB; AN 92-295405 & JP-A-4 202 218 (MITSUI PETROCHEMICAL INDUSTIES, LTD) 23 July 1992
- DATABASE WPI Week 9320, Derwent Publications Ltd., London, GB; AN 93-164512 & JP-A-5 097 933 (IDEMITSU KOSAN CO.,LTD.) 20 April 1993
- "Special Printing and Converting, PTP Package", 29.3.1990, Processing Technique Research Institute, pp. 641-647
- "Newest Laminating Processing Manual", 30.06.1989, Processing Technique Research Institute, pp. 940-943

## Description

The present invention relates to the use of a sheet or film as a PTP (press through pack) or blister packaging material, to a PTP or blister package and to a method of packaging articles in a PTP or blister package.

Blister packages are employed widely for packaging articles such as those for daily use, household tools and precision instruments. For preparing a blister package, a thermoplastic film is first processed by vacuum forming or pneumatic forming to form blisters thereon, namely portions swollen in a predetermined contour corresponding to each article to be received therein. After the blistered film has solidified, each blister is charged with the article to be packed and the film is then covered by a sealing sheet (such as a paper used as the support), and the resulting composite containing the articles in the blisters is subjected to heat sealing or gluing at the "flange" portions surrounding each blister to effect the final sealing of the package. In many cases, the blistered film is prepared from a tranparent film to allow visual inspection of the package contents. For the packaging of, in particular, a small-sized article, such as a tablet or a drug capsule, PTP has hitherto been employed widely. A fragile or easily torn film, such as an aluminium foil, is used as the sealing sheet so as to permit easy removal of the packed article by a simple finger-rupture of the sealing sheet.

The sheet or film material used for the PTP or blister packaging, has certain requirements: transparency, moistureproofing and processibility by vacuum forming or pneumatic forming. In particular an especially high moistureproof property is required for packaging an unstable tabletted or encapsulated drug.

For such a sheet or film material there have heretofore been employed synthetic polymers, such as polyvinyl chloride and polypropylene. Since, however, the moistureproof property, namely the imperviousness to moisture, of these materials is insufficient, the moistureproof property of such a sheet or film has been improved, either by coating it with a layer of polyvinylidene chloride or by laminating or forming multilayers of the sheet or film. In view of the protection of the environment, alternative materials for such conventional polymer materials are desired, and thus a partial replacement with polypropylene has been practiced. However, the sole employment of polypropylene brings about defects in that the resulting product has inferior processibility by a vacuum or pneumatic forming with lower productivity and has a lower transparency and inferior moistureproof property.

JP-A-292601/1986 discloses a random copolymer based on a cycloolefin, formed from ethylene and a cycloolefin monomer of formula (1) given below wherein n = 0, as an optical material.

However, this copolymer has, in general, a very brittle nature, making it difficult to make a sheet or film with very poor processibility in a vacuum forming step. Thus no suggestion is found therein as to its use for a sheet or film material for a PTP or blister package.

JP-A-196832/1990 discloses a sheet or film product obtained by biaxial stretching a cycloolefin random copolymer of ethylene and a cycloolefin monomer of formula (1) given below wherein n = o, which copolymer has an intrinsic viscosity of 0.01 - 10 dl/g determined in decalin at 135°C and a softening temperature determined by TMA (Thermal Mechanical Analysis) of at least 70°C.

Since, however, the biaxially stretched sheet or film inevitably has shrinkage, when the surface thereof has a temperature above the softening point, processing by a vacuum or pneumatic forming at a temperature above its softening point is difficult.

EP-A-384,694 discloses a sheet or film formed of at least one cycloolefin polymer selected from ring-opened polymers derived from a cycloolefin hydrogenation products thereof and addition products thereof with ethylene.

The present invention seeks to provide a sheet or film product for use for a PTP or blister package in which the above-mentioned disadvantages are avoided and which has excellent moistureproof property and transparency with superior processibility by vacuum or pneumatic forming.

The present invention also seeks to provide a novel structure of a PTP or blister package which has a superior moistureproof property and is capable of preserving the packaged article for a long time and which has an excellent appearance.

The present invention further seeks to provide a method for packaging various articles in which a PTP or a blister package having superior moisture-imperviousness and transparency can easily be obtained.

The present invention provides the use in the production of a PTP or blister packaging formed product having blisters thereon, of a non-stretched sheet or film comprising a layer made of at least one non-crystalline polyolefin resin (A) selected from 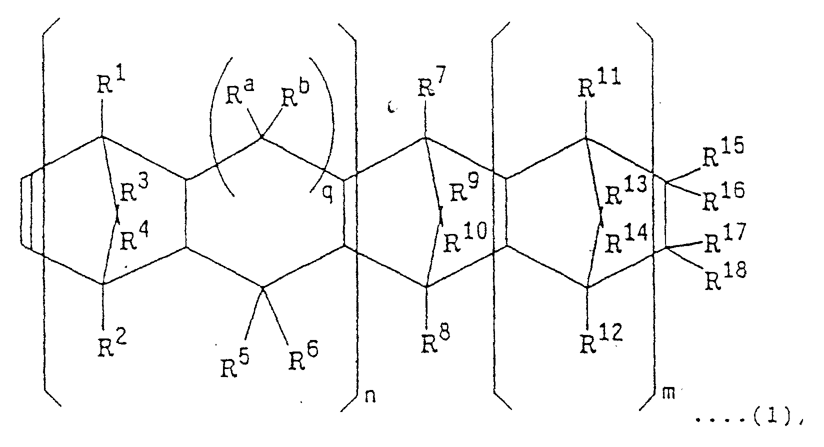 in which n is zero or 1, m is zero or a positive integer, q is zero (when a five-membered ring results) or 1, R¹ to R¹⁸, R^{a} and R^{b} each independently represent a hydrogen atom, a halogen atom or a hydrocarbon group; R¹⁵ - R¹⁸ may be linked to each other to form a monocyclic or polycyclic group which may have one or more double bond; and R¹⁵ and R¹⁶, or R¹⁷ and R¹⁸, may together form an alkylidene group, the random copolymer having an intrinsic viscosity [η] of 0.01 - 10 dl/g determined in decalin at 135°C and a softening temperature (TMA) of 50 - 200°C,
and
(A-c) a graft-modified product of said random copolymer (A-a).

The present invention also provides a PTP or blister package, comprising
(I) a formed product having blisters thereon prepared by forming a sheet or film comprising a layer made of at least one non-crystalline polyolefin resin (A) and
(II) a sealing element for sealing the formed product containing in the cavities of the blisters the articles to be packaged.

The present invention further provides a method for packing articles in a PTP or blister package, comprising
placing each article to be packed in a cavity of a blister of a formed product having blisters and flange portions surrounding each blister and prepared by forming a sheet or film comprising a layer made of at least one non-crystalline polyolefin resin (A),
covering the formed product having articles accommodated in the blister cavities thereof with a sealing element and
bonding the flange portions of the formed product to the sealing element by heat sealing or by means of an adhesive to effect tight sealing of the package.

The sheet or film is used for preparing a PTP or a blister package. Such a PTP or blister package is prepared by first forming blisters over the sheet or film for providing for receiving each article to be packed and, after each of the blisters has received the article, sealing each blister by, for example, heat sealing or gluing the "flange" portions of the sheet or film surrounding each blister with a flat sealing member to finish the package.

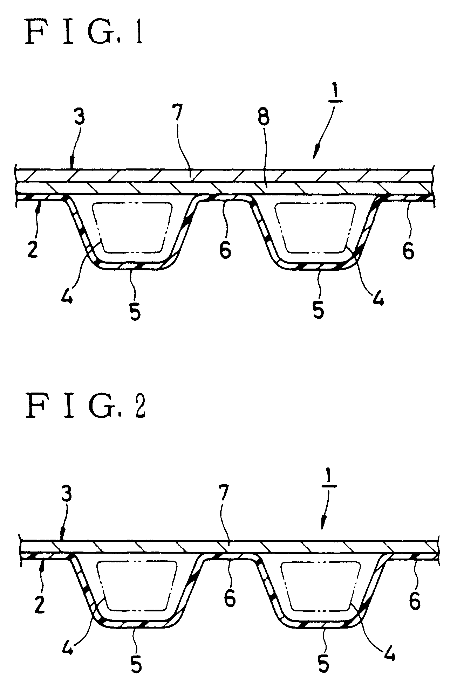

Figs. 1-4 each show a section of a package according to the present invention with each article being enclosed in the blister.

The sheet or film for a PTP or blister package comprises, a monolayer sheet or film made of the non-crystalline polyolefin resin (A) or a laminated sheet or film composed of at least one layer of the non-crystalline polyolefin resin (A) and at least one further layer of a crystalline polyolefin resin (B).

### Non-crystalline Polyolefin Resin (A)

For the non-crystalline polyolefin resin (A) to be employed as the material for at least a part of the sheet or film, there is employed either the above-mentioned cycloolefin random copolymer (A-a), or a graft-modified product (A-c) of polymer product (A-a). Additionally, a (co)polymer obtained by ring-opening polymerisation of a cycloolefin of general formula (1), or a hydrogenation product thereof, which has an intrinsic viscosity [η] of 0.01-10 dl/g determined in decalin at 135°C and a softening temperature (TMA) of 50-200°C (A-b) or a graft-modified product of said ring opened (co)polymer or its hydrogenation product (A-b), may be included in the layer made of at least one non-crystalline polyolefin resin (A). These polymers are further described in detail below.

The cycloolefin component to be employed for the non-crystalline polyolefin resin comprising one of the above-mentioned polymer products (A-a) to (A-c) is at least one cycloolefin monomer of formula (1).

In formula (1), R¹ to R¹⁸, R^{a} and R^{b} each represent independently a hydrogen atom, halogen atom or hydrocarbon group.

Examples of the halogen atom and fluorine, chlorine, bromine and iodine.

Examples of the hydrocarbon group are alkyl groups having 1 to 20 carbon atoms, halogenated alkyl groups having 1 to 20 carbon atoms, cycloalkyl groups having 3 to 15 carbon atoms and aromatic hydrocarbon groups. The alkyl groups may be, for example, methyl, ethyl, propyl, isopropyl, amyl, hexyl, octyl, decyl, dodecyl and octadecyl. The halogenated alkyl groups may be those in which the hydrogen atoms of the above alkyl groups are replaced at least partly by fluorine atoms, chlorine atoms bromine atoms or iodine atoms.

The cycloalkyl groups may be, for example, cyclohexyl. The aromatic hydrocarbon groups may be, for example, phenyl or naphthyl.

It is also permissible that a monocyclic or polycyclic ring may be formed by combining any of the pairs consisting of R¹⁵ with R¹⁶, R¹⁷ with R¹⁸, R¹⁵ with R¹⁷, R¹⁶ with R¹⁸, R¹⁵ with R¹⁸ and R¹⁶ with R¹⁷ respectively. Such a monocyclic or polycyclic ring formed in this manner may have one or more double bonds. Examples of such a monocyclic or polycyclic ring thus formed include the following ring structures:

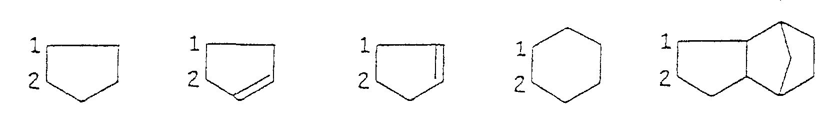

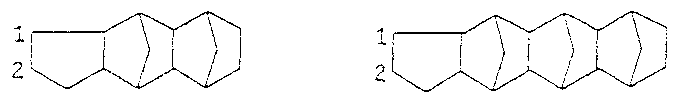

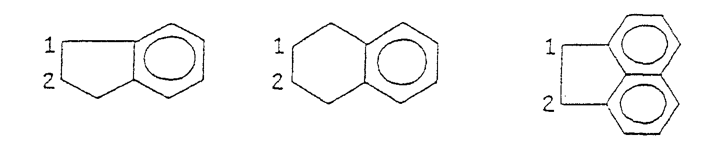

In the above structures, the carbon atom marked with a numeral 1 or 2 indicates the carbon atom to which either R¹⁵(R¹⁶) or R¹⁷(R¹⁸) is combined.

It is also possible that an alkylidene radical may be formed by a combination of either R¹⁵ with R¹⁶ or R¹⁷ with R¹⁸. Such alkylidene radicals may, in general, have 2 to 20 carbon atoms; examples include ethylidene, propylidene and isopropylidene.

Preferred cycloolefin monomers of formula (1) are those of formula (1-1): 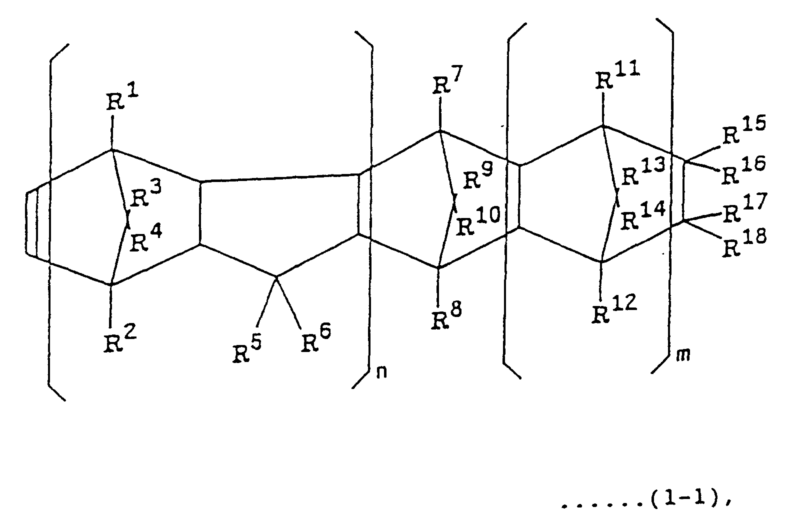 wherein n, m and R¹ to R¹⁸ are as defined in formula (1).

Compounds of formula (2) are also examples of the cycloolefin monomer of formula (1): 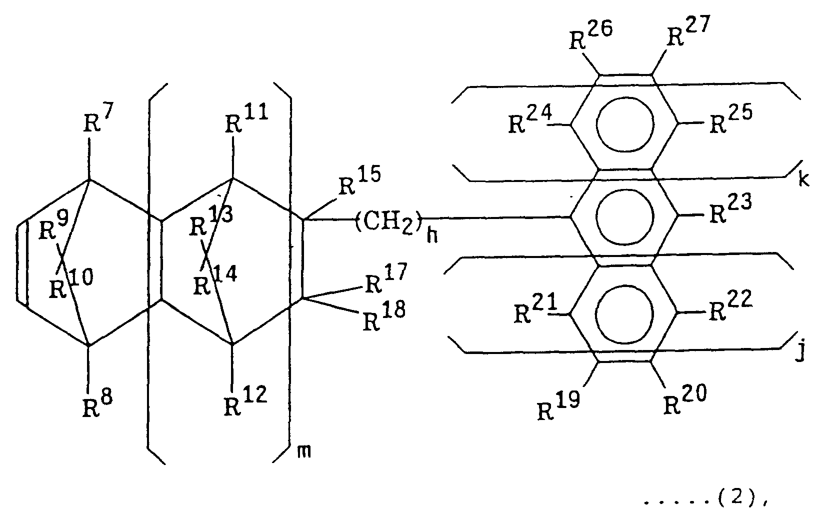 wherein h is zero or a positive integer, j and k each represent an integer of zero, 1 or 2, m, R⁷ to R¹⁵ and R¹⁷ to R¹⁸ are as defined in formula (1) and R¹⁹ to R²⁷ each represents independently a hydrogen atom, a halogen atom, a hydrocarbon group or an alkoxy group.

The halogen atoms herein are the same as those in formula (1).

Examples of the hydrocarbon radicals R¹⁹ to R²⁷ are alkyl groups having 1 to 20 carbon atoms, halogenated alkyl groups having 1 to 20 carbon atoms, cycloalkyl groups having 3 to 15 carbon atoms and aromatic hydrocarbon radicals. Concrete examples include, for the alkyl group, methyl, ethyl, propyl, isopropyl, amyl, hexyl, octyl, decyl, dodecyl and octadecyl; and for the halogenated alkyl group, those in which at least a part of hydrogen atoms in the above-exemplified alkyl groups is replaced by fluorine atoms, chlorine atoms, bromine atoms or iodine atoms.

An example of the cycloalkyl group is cyclohexyl. The aromatic hydrocarbon radical may, for example, be an aryl group or aralkyl group, examples of which include phenyl, tolyl, naphthyl, benzyl are phenyl ethyl.

Examples of the alkoxy group are methoxy, ethoxy and propoxy. It is permissible for the carbon atom to which R¹⁷ and R¹⁸ are combined to be bonded directly or via an alkylene group having 1 to 3 carbon atoms to the carbon atom to which R²¹ is combined or to the carbon atom to which R¹⁹ is combined. Thus, in case the two carbon atoms mentioned above are combined with intermediation of an alkylene group, the radicals represented by R¹⁷ and R²¹ or the radicals represented by R¹⁸ and R¹⁹ will form together an alkylene radical selected from methylene (-CH₂-), ethylene (-CH₂CH₂-) and trimethylene (-CH₂CH₂CH₂-).

In the case that j = k = 0 in formula (2), the radical pair R²³ with R²⁰ or R²³ with R²⁷ may combine to form a monocyclic or polycyclic aromatic ring. Examples of the monocyclic or polycyclic aromatic ring in the case when R²³ and R²⁰ form an aromatic ring when j = k = 0 include: 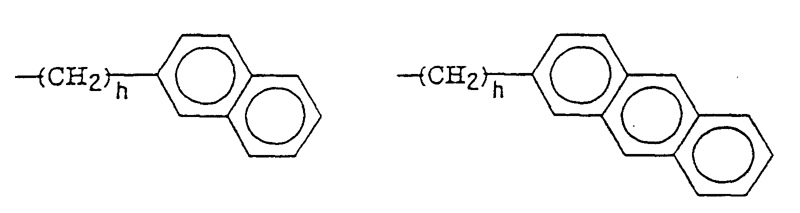 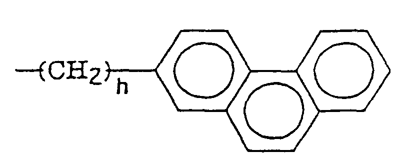 In the above exemplified formulae, the symbol h is the same as that in formula(2).

Examples of the cycloolefin monomer of formulae (1), (1-1) and (2) are:
derivatives of bicyclo[2.2.1]hept-2-ene,
derivatives of tetracyclo[4.4.0.1^{2'5}.1^{7'10}]-3-dodecene,
derivatives of hexacyclo[6.6.1.1^{3'6}.1^{10'13}.0^{2'7}.0^{9'14}]-4-heptadecene,
derivatives of octacyclo[8.8.0.1^{2'9}.1^{4'7}.1^{11'18}.1^{13'16}.0^{3'8}.0^{12'17}]-5-docosene,
derivatives of pentacyclo[6.6.1.1^{3'6}.0^{2'7}.0^{9'14}]-4-hexadecene,
derivatives of heptacyclo-5-eicosene,
derivatives of heptacyclo-5-heneicosene,
derivatives of tricyclo[4.3.0.1^{2'5}]-3-decene,
derivatives of tricyclo[4.4.0.1^{2'5}]-3-undecene,
derivatives of pentacyclo[6.5.1.1^{3'6}.0^{2'7}.0^{9'13}]-4-pentadecene,
derivatives of pentacyclopentadecadiene,
derivatives of pentacyclo[7.4.0.1^{2'5}.1^{9'12}.0.^{8'13}]-3-pentadecene,
derivatives of heptacyclo[8.7.0.1^{3'6}.1^{10'17}.1^{12'15}.0^{2'7}.0^{11'16}]-4-eicosene,
derivatives of nonacyclo[10.9.1.1^{4'7}.1^{13'20}.1^{15'18}.0^{3,8}.0^{2'10}.0^{12'21}.0^{14'19}]-5-pentacosene
derivatives of pentacyclo[8.4.0.1^{2'5}.1^{9'12}.0^{8'13}]-3-hexadecene,
derivatives of heptacyclo[8.8.0.1^{4'7}.1^{11'18}.1^{13'16}.0^{3'8}.0^{12'17}]-5-heneicosene,
derivatives of nonacyclo[10.10.1.1^{5'8}.1^{14'21}.1^{16'19}.0^{2'11}.0^{4'9}.0^{13'22}.0^{15'20}]-5-hexacosene,
derivatives of 1,4-methanol-1,4,4a,9a-tetrahydrofluorene,
derivatives of 1,4-methano-1,4,4a,5,10,10a-hexahydroanthracene and
cydopentadiene-acenaphthylene adducts.

More concrete examples of the cycloolefins represented by the general formulae (1), (1-1) and (2) are given below:
Derivatives of bicyclo[2.2.1]hept-2-ene, such as 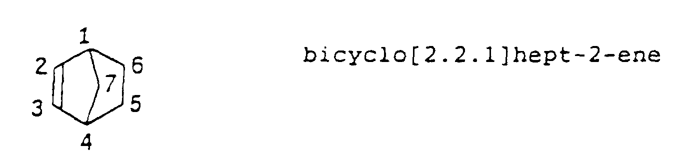 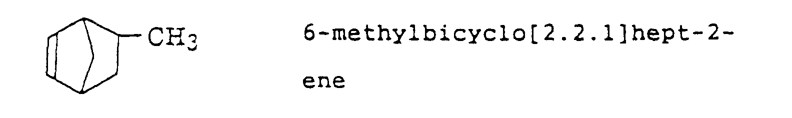 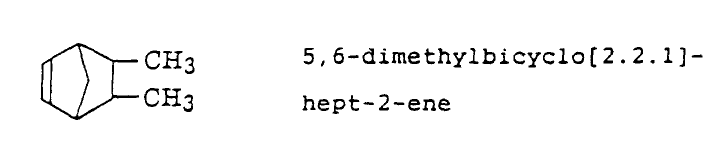 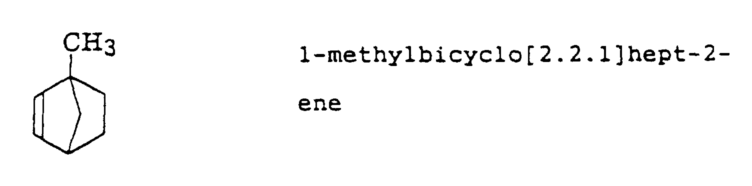 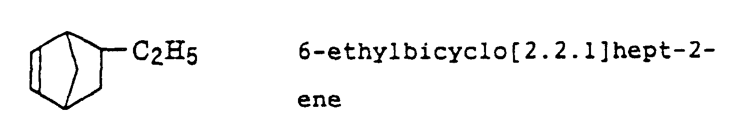 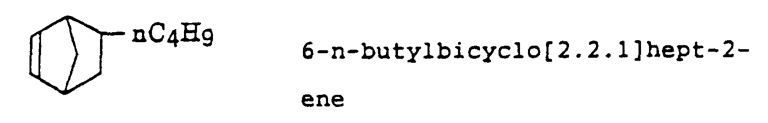 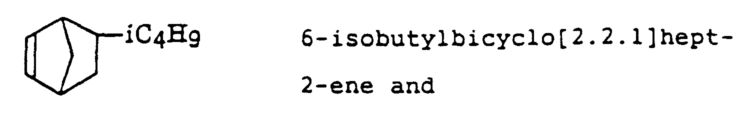 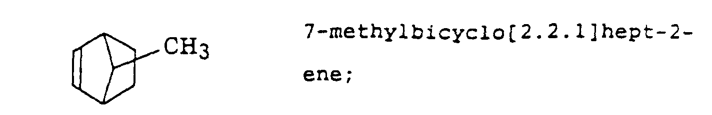
derivatives of tetracyclo[4.4.0.1^{2'5}.1^{7'10}]-3-dodecene, such as: 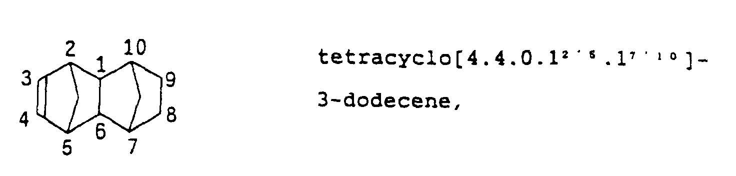 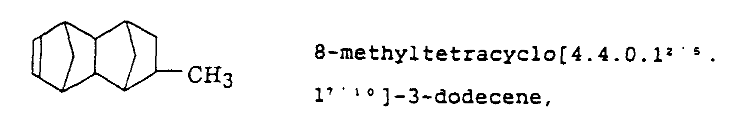 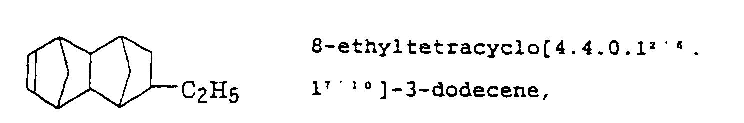 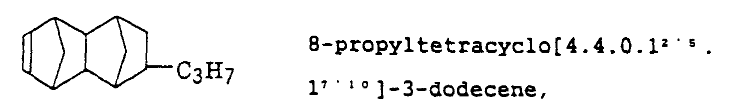 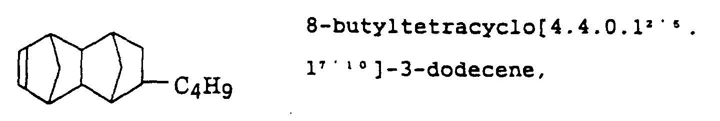 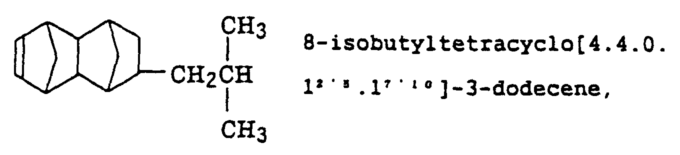 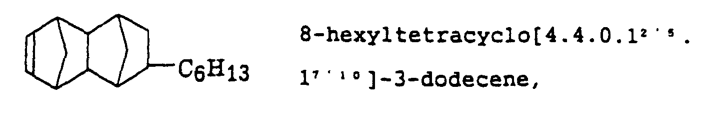 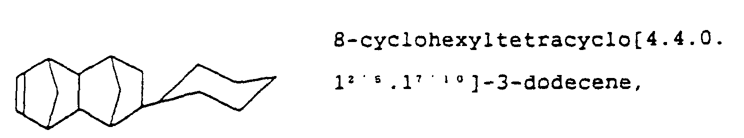 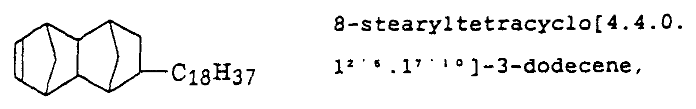 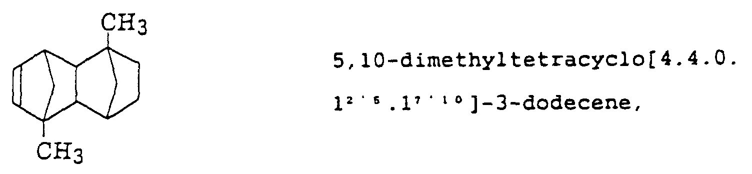 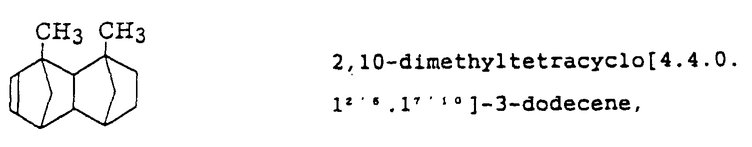 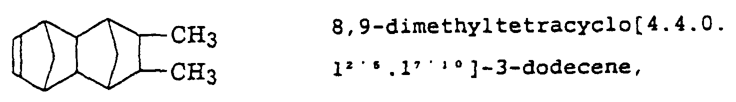 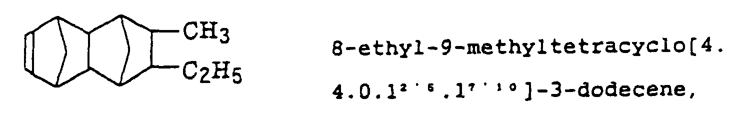 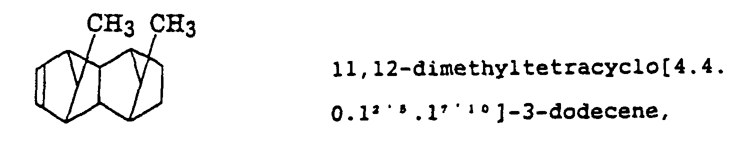 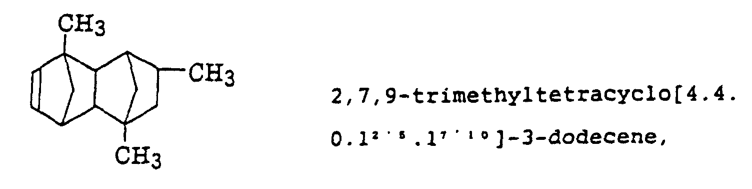 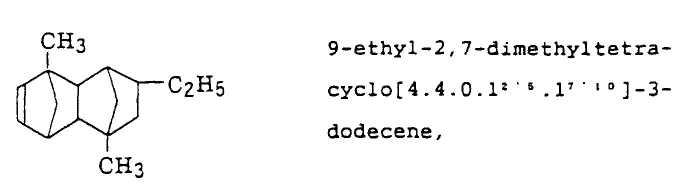 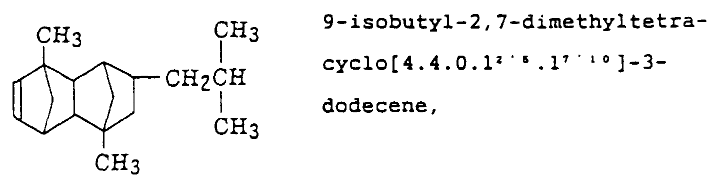 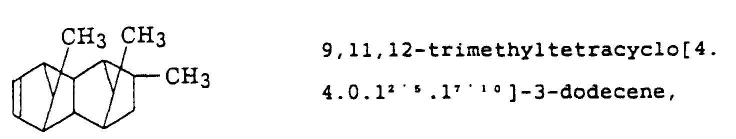 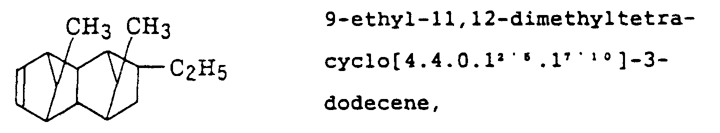 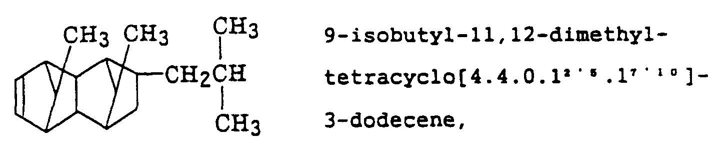 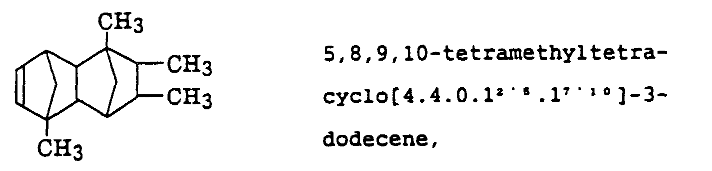 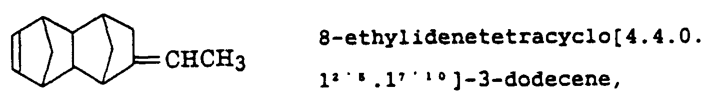 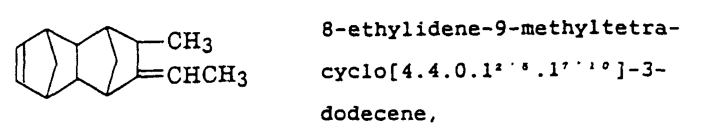 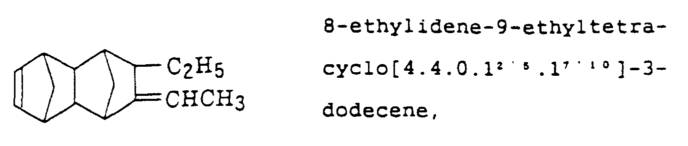 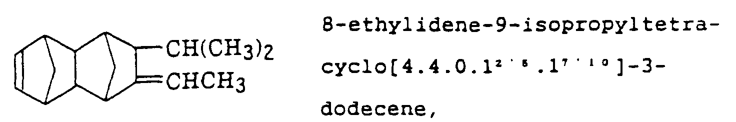 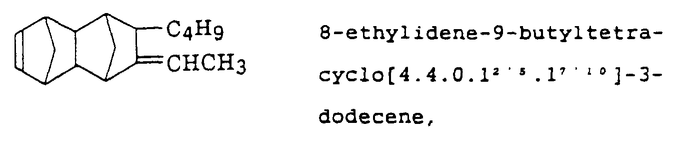 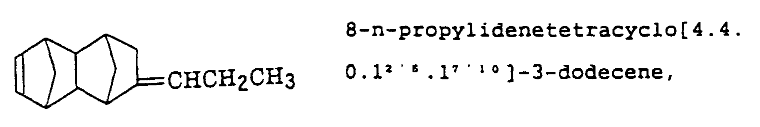 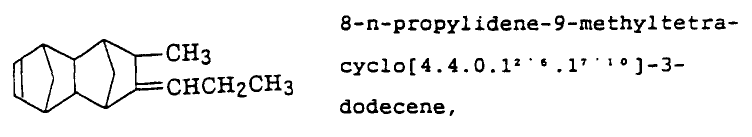 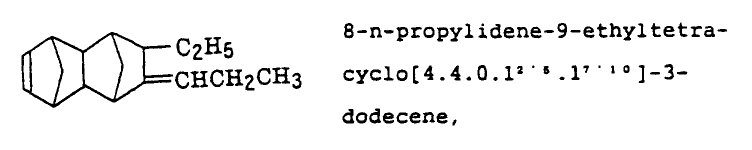 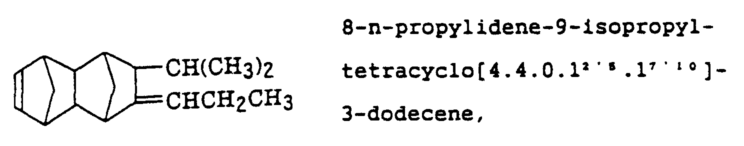 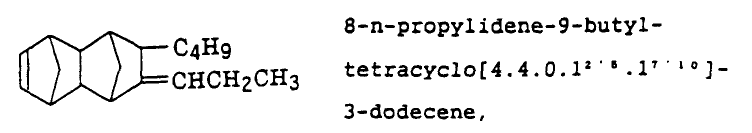 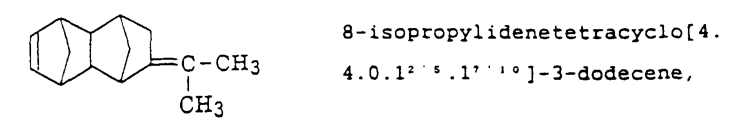 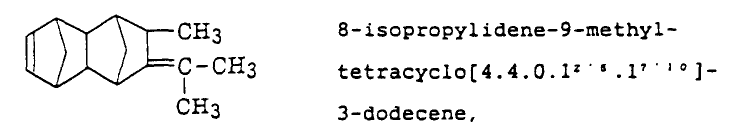 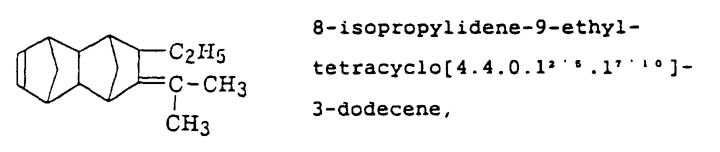 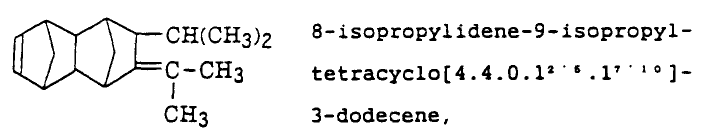 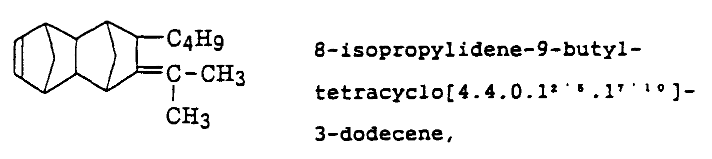 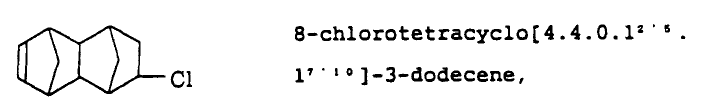 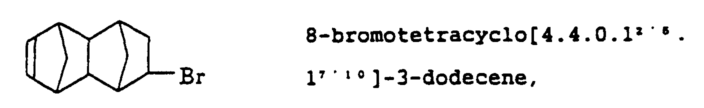 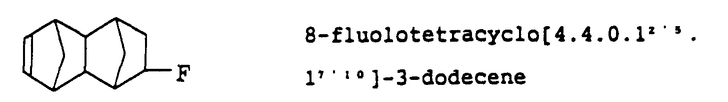 and 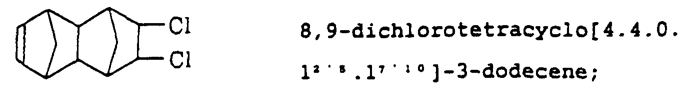
derivatives of hexacyclo[6.6.1.1^{3'6}.1^{10'13}.0^{2'7}.0^{9'14}]-4-heptadecene, such as: 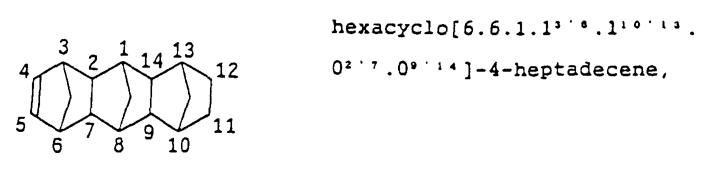 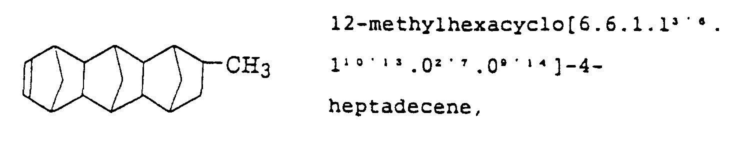 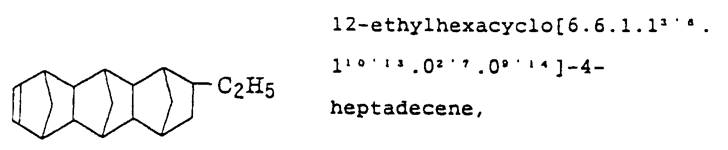 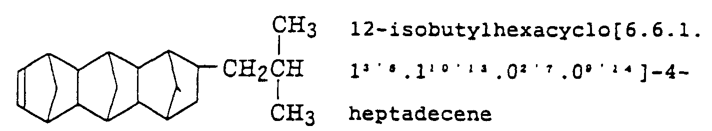 and 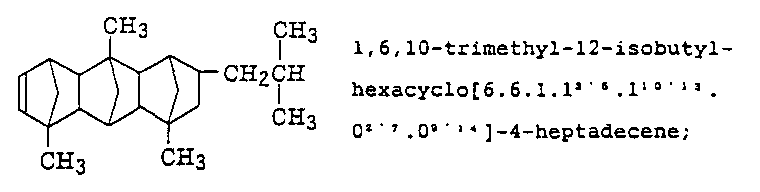
derivatives of octacyclo[8.8.0.1^{2'9}.1^{4'7}.1^{11'18}.1^{13'16}.0^{3'8}.0^{12'17}]-5-docosene, such as: 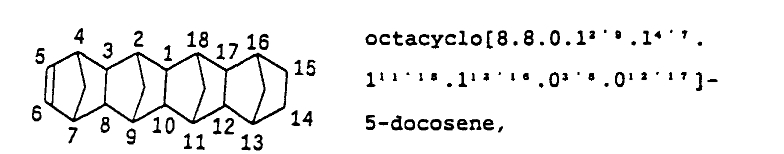 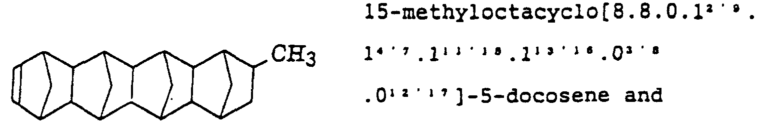 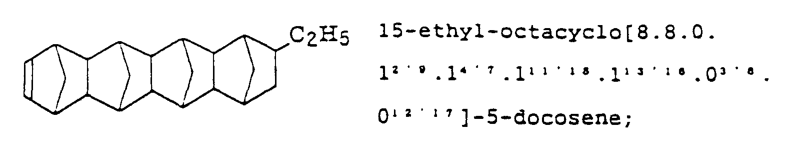
derivative of pentacyclo[6.6.1.1^{3'6}.0^{2'7}.0^{9'14}]-4-hexadecene, such as: 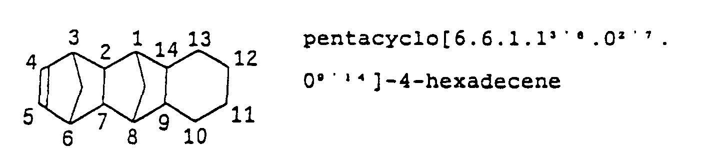 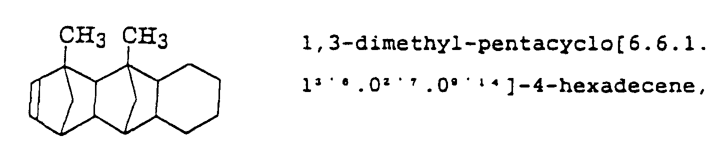 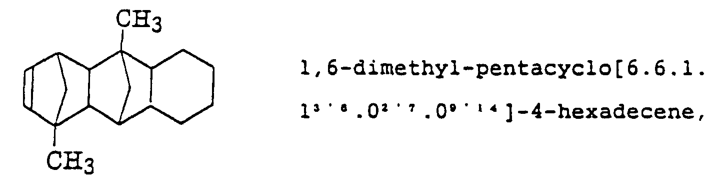 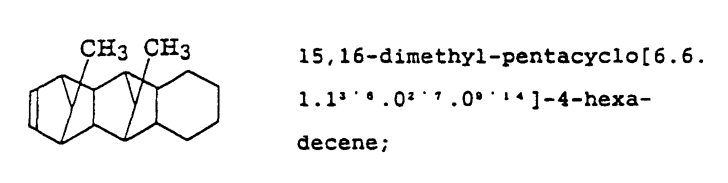
derivatives of heptacyclo-5-eicosene and of heptacyclo-5-heneicosene, such as: 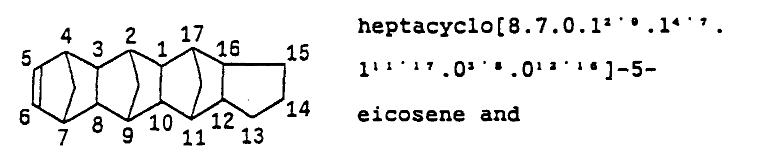 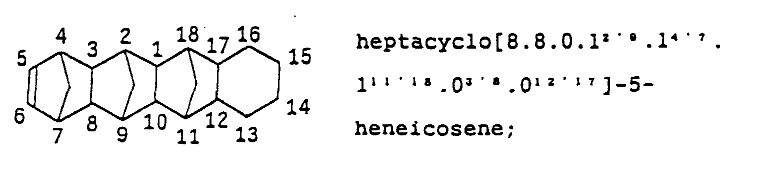
derivatives of tricyclo[4.3.0.1^{2'5}]-3-decene, such as: 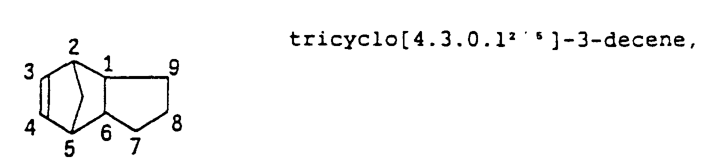 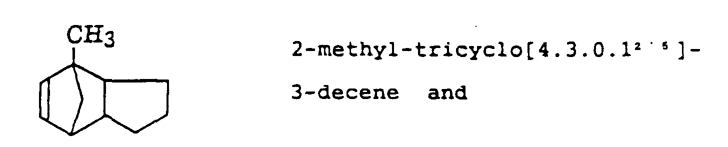 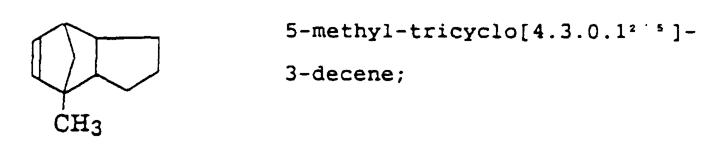
derivatives of tricyclo[4.4.0.1^{2'5}]-3-undecene, such as: 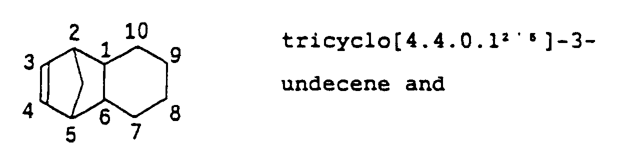 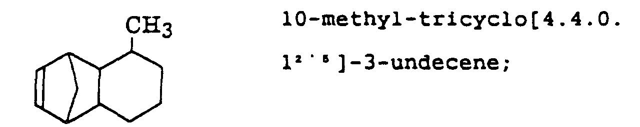
derivatives of pentacyclo[6.5.1.1^{3'6}.0^{2'7}.0^{9'13}]-4-pentadecene, such as: 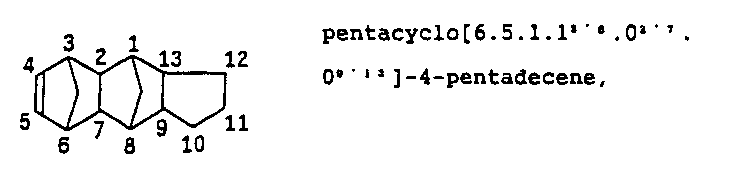 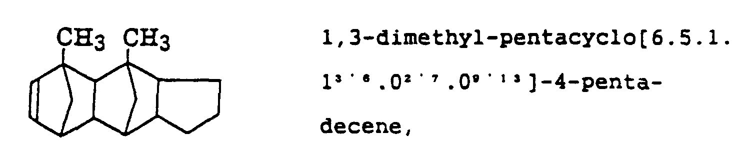 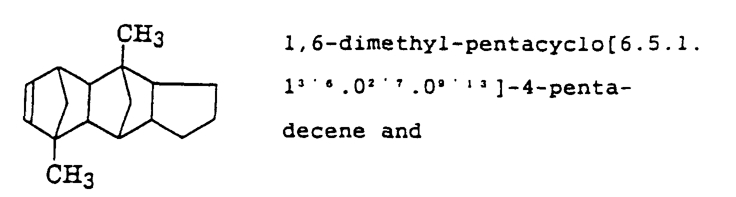 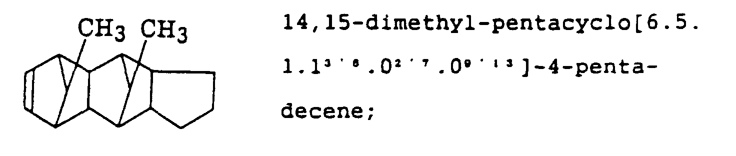
derivatives of diene compounds, such as: 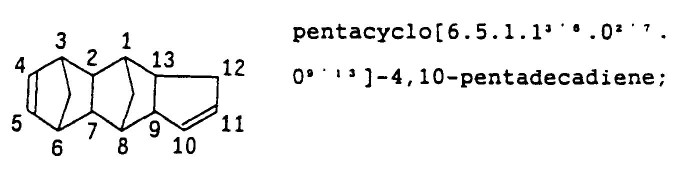
derivatives of pentacyclo[7.4.0.1^{2'5}.1^{9'12}.0^{8'13}]-3-pentadecene, such as: 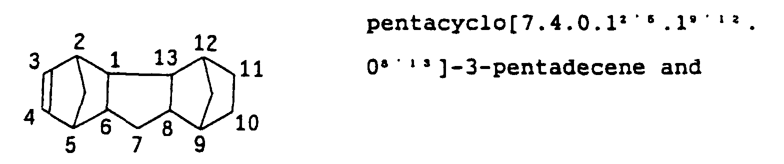 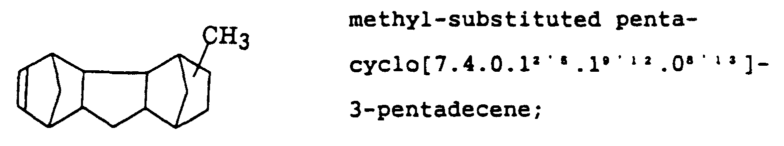
derivatives of heptacyclo[8.7.0.1^{3'6}.1^{10'17}.1^{12'15}.0^{2'7}.0^{11'16}]-4-eicosene, such as: 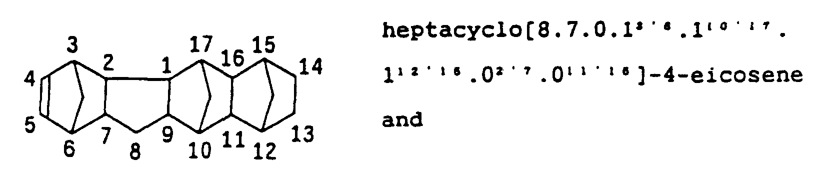 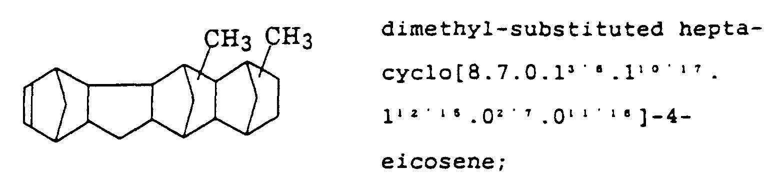
derivatives of nonacyclo[10.9.1.1^{4'7}.1^{13'20}.1^{15'18}.0^{3'8}.0^{2'10}.0^{12'21}.0^{14'19}]-5-pentacosene, such as: 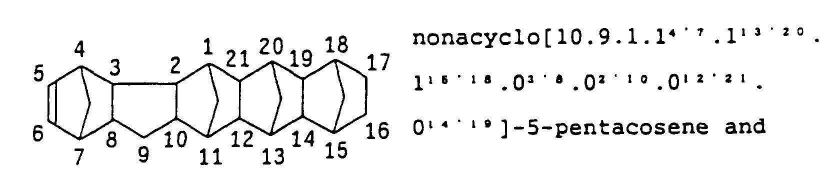 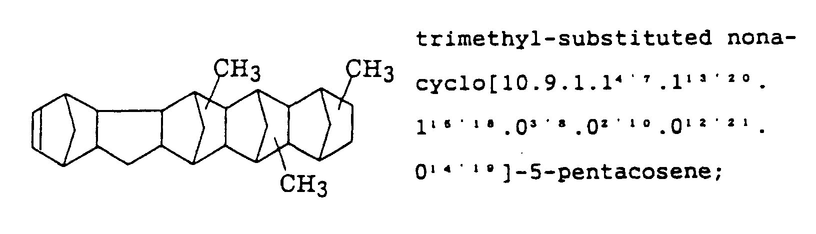
derivatives of pentacyclo[8.4.0.1^{2'5}.1^{9'12}.0^{8'13}]-3-hexadecene, such as: 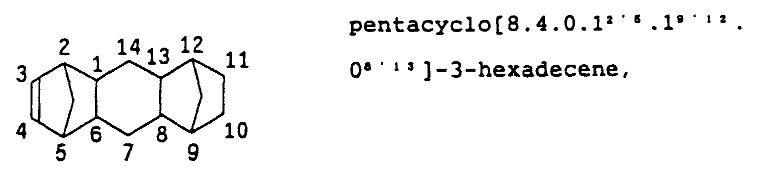 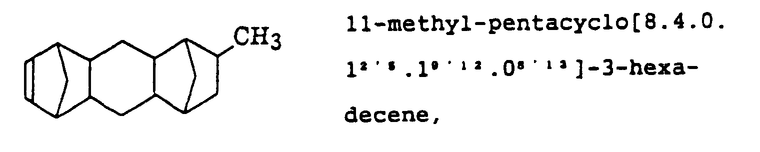 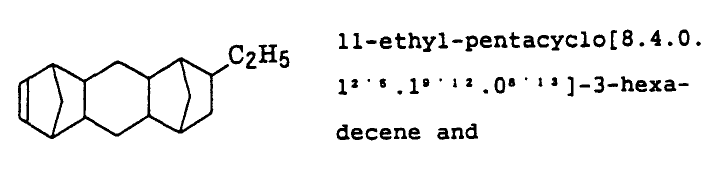 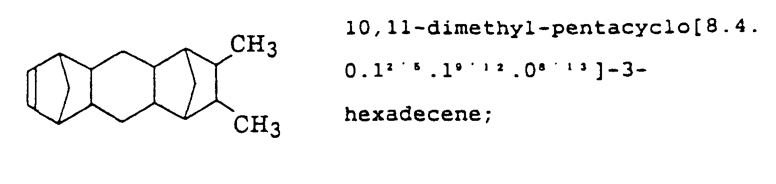
derivatives of heptacyclo[8.8.0.1^{4'7}.1^{11'18}.1^{13'16}.0^{3'8}.0^{12'17}]-5-heneicosene, such as: 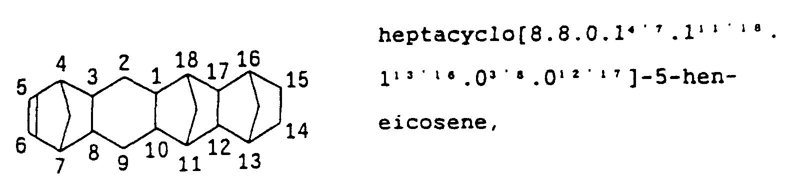 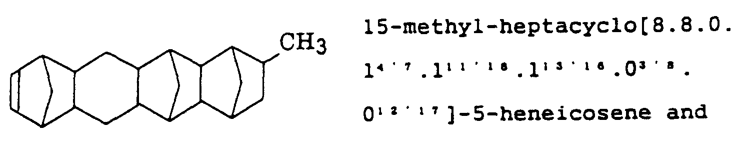 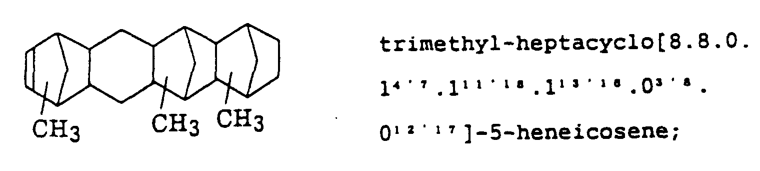
derivatives of nonacyclo[10.10.1.1^{5'8}.1^{14'21}.1^{16'19}.0^{2'11}.0^{4'9}.0^{13'22}.0^{15'20}]-5-hexacosene, such as: 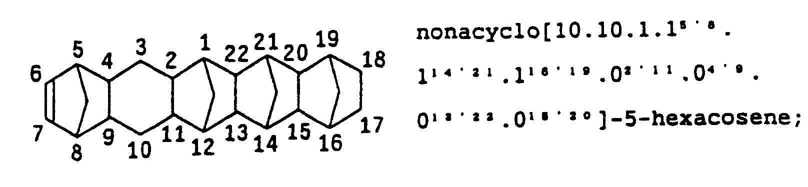
and miscellaneous other compounds, such as: 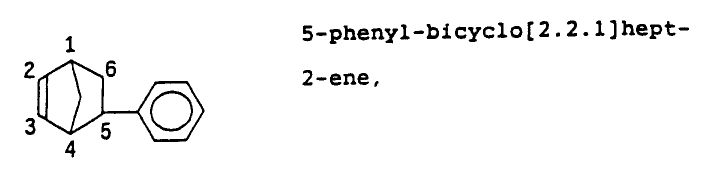 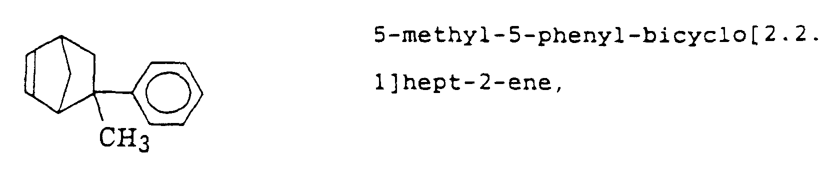 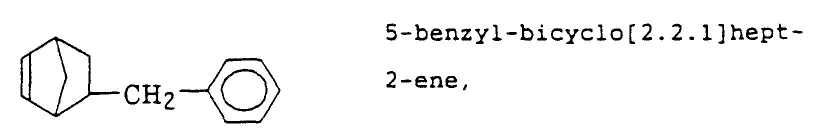 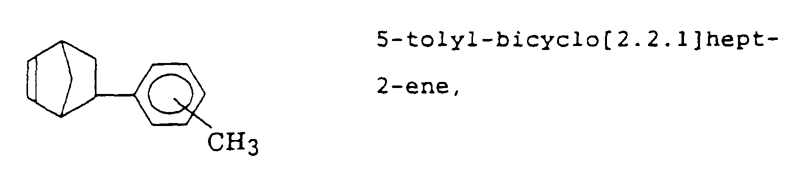 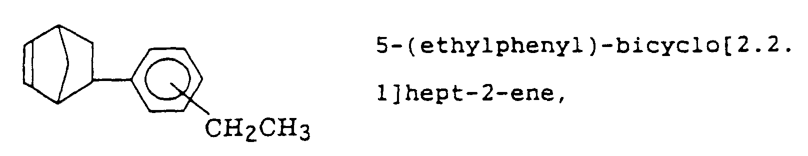 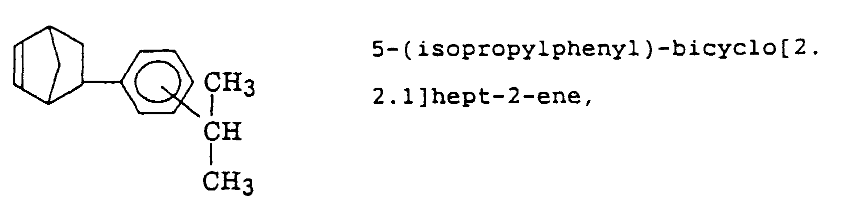 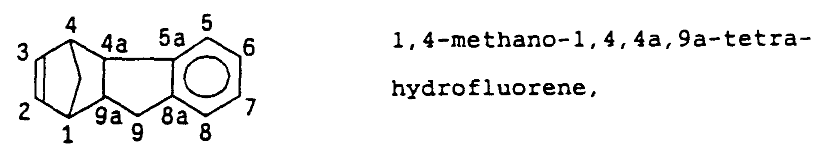 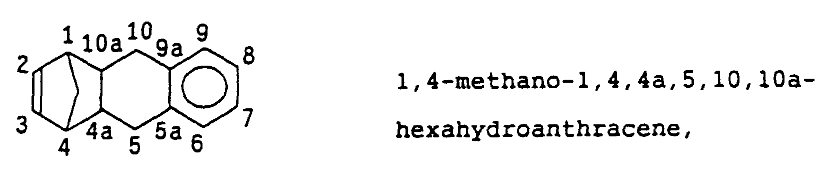 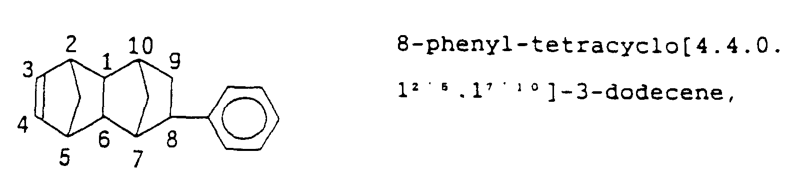 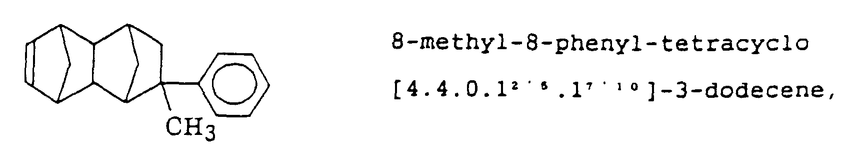 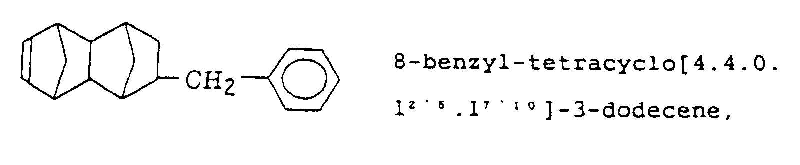 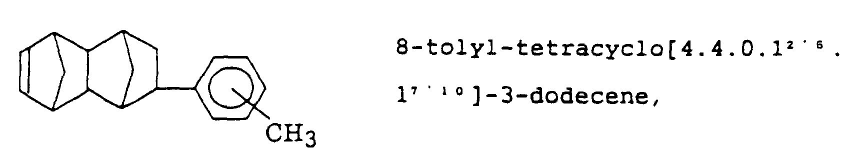 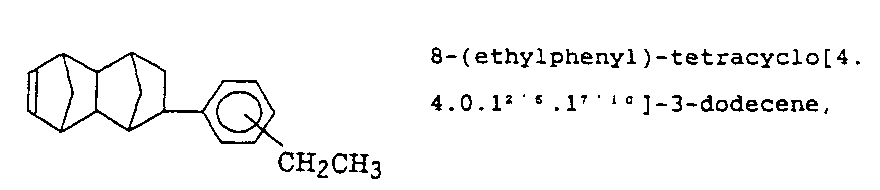 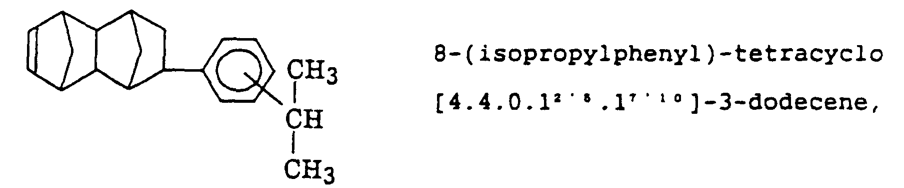 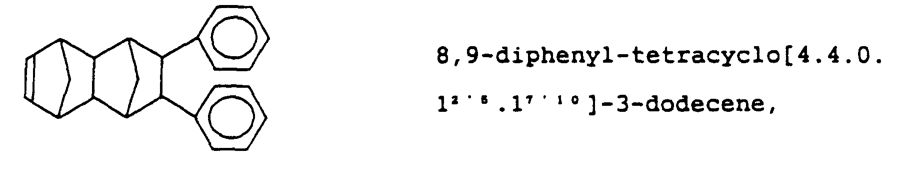 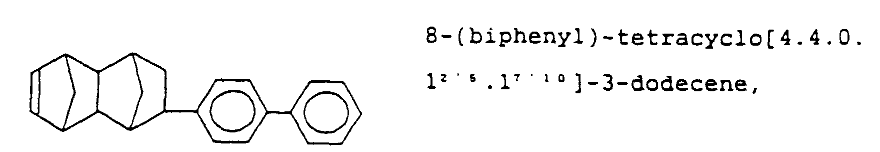 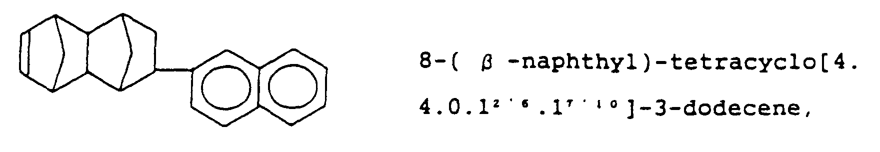 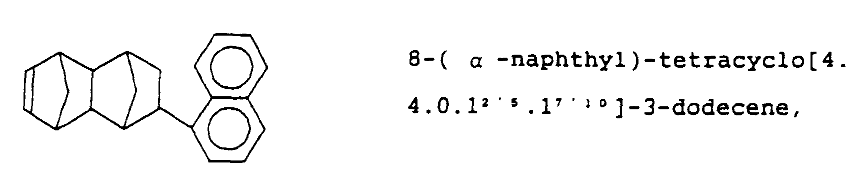 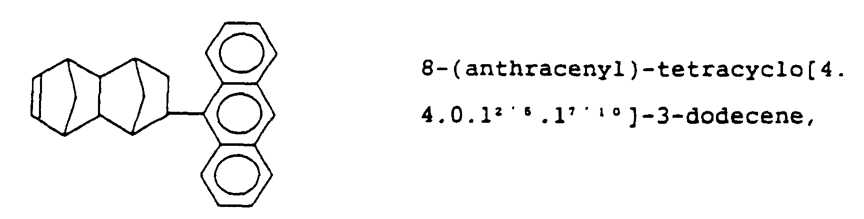 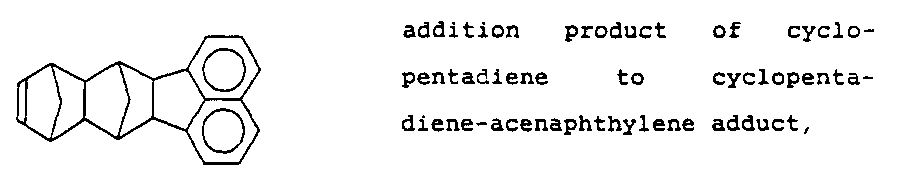 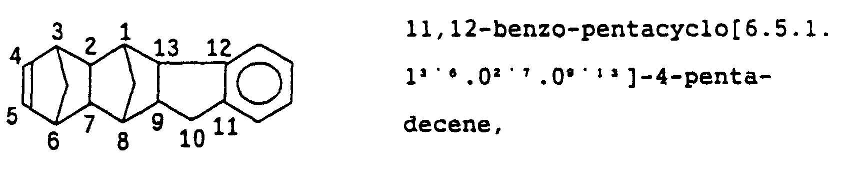 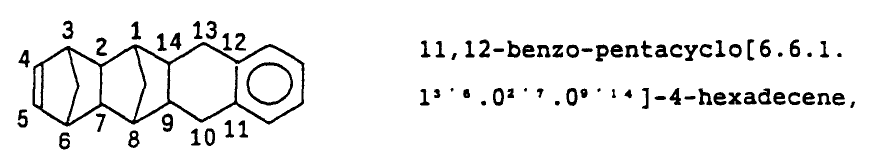 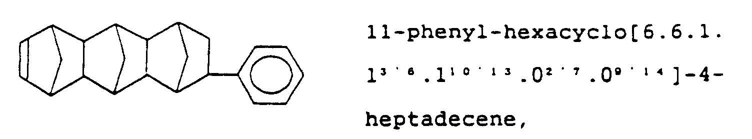 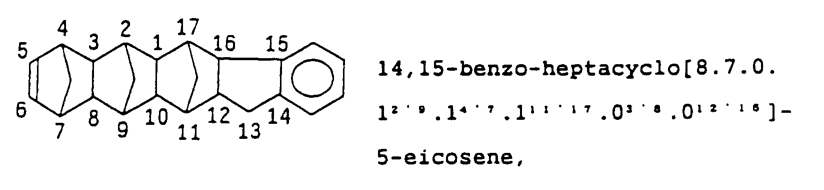 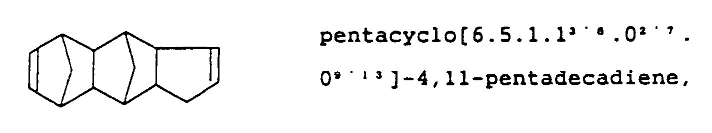 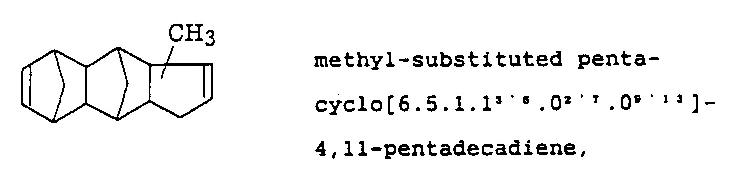 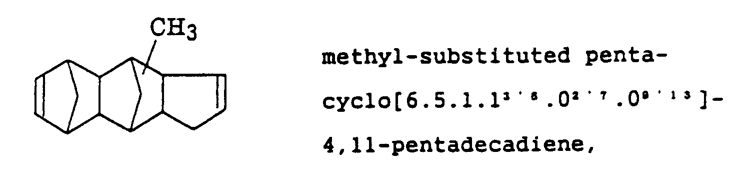 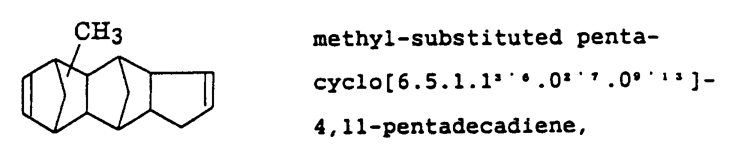 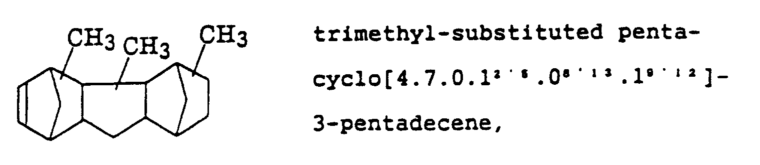 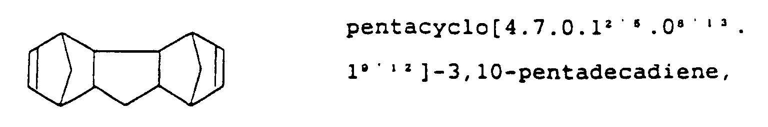 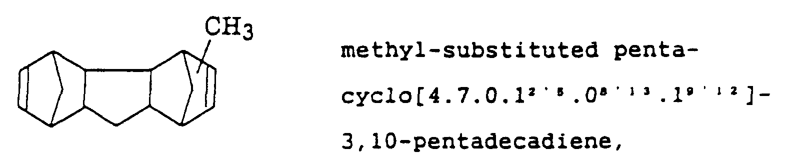 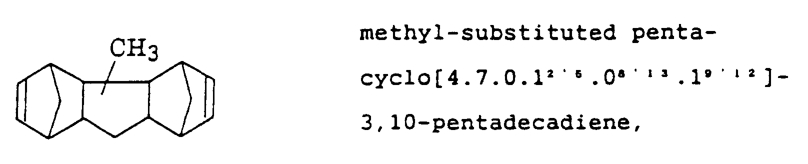 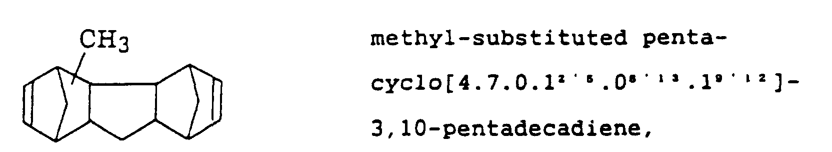 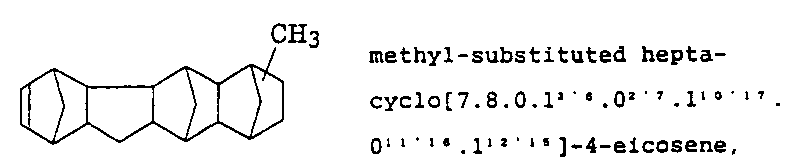 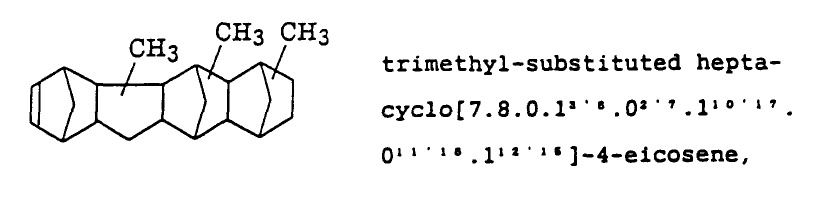 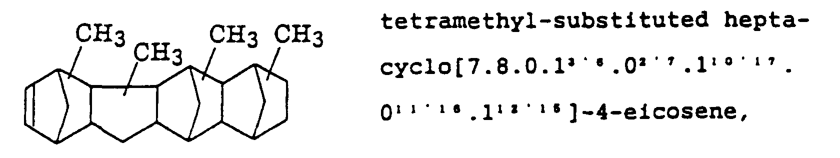 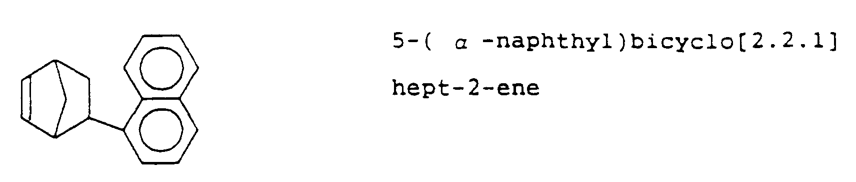 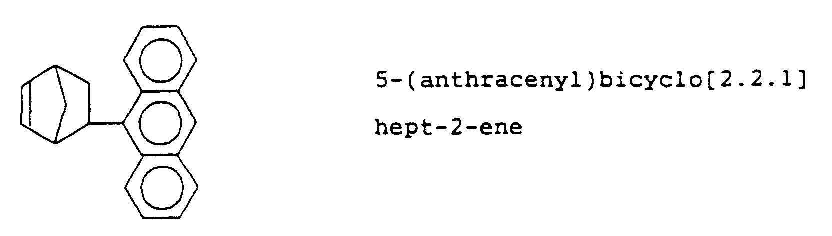 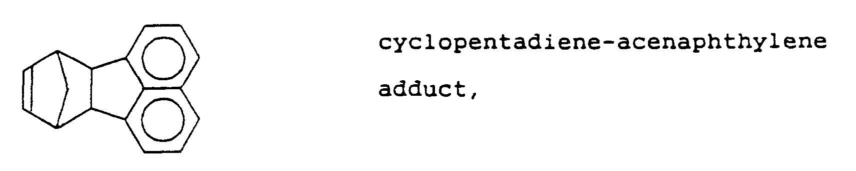
   The cycloolefins of formulae (1), (1-1) and (2) can be produced by subjecting cyclopentadiene and an olefin compound of the corresponding molecular structure to the Diels-Alder reaction.

### Cycloolefin Random Copolymer (A-a)

The cycloolefin random copolymer (A-a) comprises the cycloolefin component mentioned above and an ethylene component as the essential constituents. Other subsidiary copolymerizable unsaturated monomer component(s) than the above two essential components may be included on requirement within a range not obstructing the purpose of the present invention.

Examples of the subsidiary unsaturated monomer are α-olefins having 3 to 20 carbon atoms, hydrocarbon-based monomers having at least two carbon-carbon double bonds in the molecule and cycloolefins other than those of formula (1).

Concrete examples of the α-olefins having 3 to 20 carbon atoms include propylene, 1-butene, 1-pentene, 4-methyl-1-pentene, 3-methyl-1-pentene, 1-hexene, 1-heptene, 1-octene, 1-nonene, 1-decene, 1-dodecene, 1-tetradecene, 1-hexadecene, 1-octadecene and 1-eicosene.

Concrete examples of the hydrocarbon-based monomer having at least two C=C double bonds in the molecule include aliphatic non-conjugated dienes, such as, 1,4-hexadiene, 1,6-octadiene, 2-methyl-1,5-hexadiene, 4-methyl-1,5-hexadiene, 5-methyl-1,5-hexadiene, 6-methyl-1,5-heptadiene and 7-methyl-1,6-octadiene; cyclic non-conjugated dienes, such as, cyclohexadiene, dicyclopentadiene, methyltetrahydroindene, 2-norbornene, 5-vinyl-2-norbornene, 5-ethyilidene-2-norbornene, 5-methylene-2-norbornene, 5-isopropylidene-2-norbornene, 6-chloromethyl-5-isopropenyl-2-norbornene and 4,9,5,8-dimethano-3a,4,4a,5,8,8a,9,9a-octahydro-1H-benzoindene; 2,3-diisopropylidene-5-norbornene; 2-ethylidene-3-isopropylidene-5-norbornene; and 2-propenyl-2,2-norbornadiene.

Among these, 1,4-hexadiene, 1,6-octadiene and cyclic non-conjugated dienes, in particular, dicyclopentadiene, 5-ethyilidene-2-norbornene, 5-vinyl-2-norbornene, 5-methylene-2-norbornene, 1,4-hexadiene and 1,6-octadiene are preferred.

Concrete examples of the cycloolefin other than the cycloolefin monomer of formula (1) include cyclobutene, cyclopentene, cyclohexene, 3,4-dimethylcyclohexene, 3-methylcyclohexene, 2-(2-methylbutyl)-1-cyclohexene, 2,3,3a,7a-tetrahydro-4,7-methano-1H-indene and 3a,5,6,7a-tetrahydro-4,7-methano-1H-indene.

Such subsidiary unsaturated monomers can be employed alone or in combination, usually in an amount not exceeding 50 mole %, based on the total moles of the randomly copolymerized comonomers in the copolymer (A-a).

In the cycloolefin random copolymer (A-a), the amount of the structural units derived from ethylene is suitably from 40 to 85 mole %, preferably 50 to 75 mole %, and the amount of the structural units derived from the cycloolefin monomer is suitably from 15 to 60 mole %, preferably 20 to 50 mole %, based on the total comonomer units in the copolymer, in which the monomer units derived from ethylene and the monomer units derived from the cycloolefin monomer in the copolymer constitute a substantially linear polymer chain with random distribution thereof in the polymer chain. The assumption that the cycloolefin random copolymer (A-a) is present as a substantially linear chain and does not exhibit a cross-linked gelled molecular structure can be ascertained by the fact that this copolymer dissolves completely in decalin at 135°C.

The cycloolefin random copolymer (A-a) has an intrinsic viscosity [η], determined in decalin at 135°C, of 0.01 to 10 dl/g, preferably 0.05 to 5 dl/g, and a softening temperature (TMA), determined on a Thermal Mechanical Analyzer, of 50 to 200 °C, preferably 60 to 200 °C and most preferably 70 to 150 °C. Here, the softening temperature (TMA) is determined by the needle-penetration method, in which a quartz needle having a diameter of 1.0 mm is placed vertically on the sheet to be tested under a load of 49 g, while the sheet is heated at a temperature elevation rate of 5 °C per minute. The temperature at which the needle has penetrated into the sheet to a depth of 0.635 mm is the softening temperature.

Preferred cycloolefin random copolymers (A-a) have an iodine value (grams of iodine per 100 grams of the copolymer) of 30 or less, preferably 25 or less, a glass transition temperature Tg of, in general, 30 to 180 °C, preferably 40 to 180 °C, and a crystallinity, determined by X-ray diffraction method, of 0 to 10 %, preferably 0 to 7 %, most preferably 0 to 5 %.

In the cycloolefin random copolymers (A-a) at least a part of the structural unit derived from the cycloolefin monomer of formula (1), (1-1) or (2) is represented by the following structural formulae (1-a), (1-1-a) or (2-a) respectively: 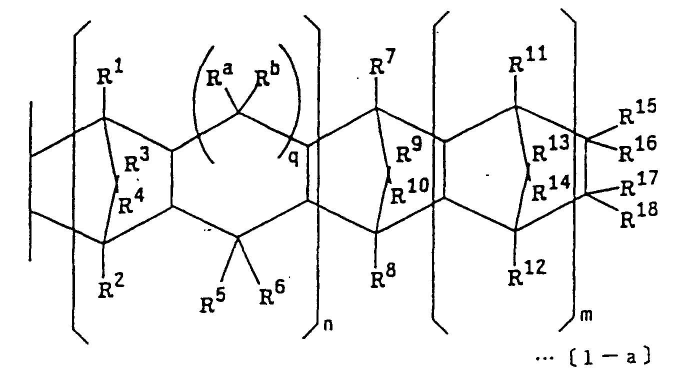 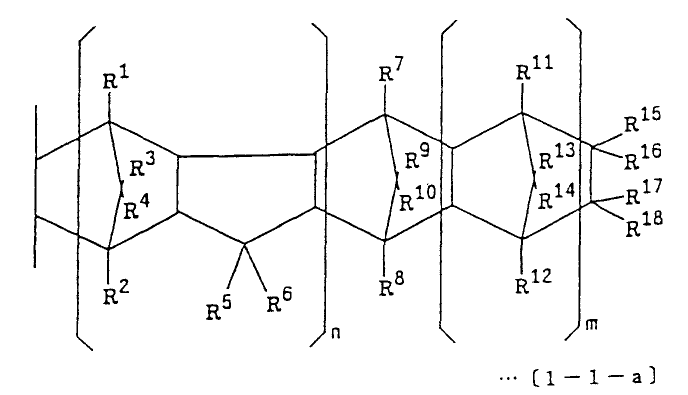 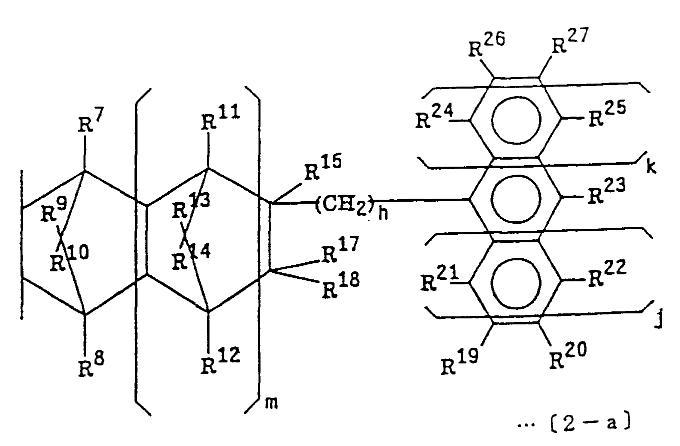 in which n, m, q, R¹ to R¹⁸, R^{a} and R^{b} in formulae (1-a) and (1-1-a) have the same meanings as those in formula (1) and m, h, j, k, R⁷ to R¹⁵ and R¹⁷ to R²⁷ in formula (2-a) have the same meanings as those in formula (2).

It is permissible to employ the cycloolefin random copolymer (A-a) either solely or in a combined form as a non-crystalline polyolefin resin mixture (denoted in the following occasionally as "the resin mixture A") together with a further cycloolefin random copolymer (A-d) having an intrinsic viscosity [η] determined in decalin at 135 °C of 0.01 to 5 dl/g, preferably 0.02 to 3 dl/g, and a softening temperature (TMA) of lower than 50 °C, preferably from -10°C to below +50 °C, most preferably from +10 °C to below +50 °C.

Preferred cycloolefin random copolymers (A-d) which have a glass transition temperature Tg of, in general, -30 to +60 °C, preferably -20 to +50 °C, and a crystallinity, determined by the X-ray diffraction method, of 0 to 10 %, preferably 0 to 7 %, most preferably 0 to 5 %, in addition to the above-mentioned physical parameters.

Copolymers (A-d) having the same structural formula as (A-a) but exhibiting parameters different from those prescribed for compound (A-a), such as the intrinsic viscosity [η] and softening temperature (TMA), can also be employed. For example, those resulting from a copolymerization of ethylene with a comonomer other than that of formula (1) and those resulting from a modification treatment of the copolymer (A-a) can be employed.

The mixing ratio of the copolymer (A-d) to the copolymer (A-a) may be 0.1 to 10 parts by weight, preferably 0.3 to 7 parts by weight, more preferably 0.5 to 5 parts by weight, most preferably 1.2 parts by weight of the copolymer (A-d) per 100 parts by weight of the copolymer (A-a).

The cycloolefin random copolymer (A-a) can be produced by copolymerizing ethylene with the cycloolefin component of formula (1), optionally together with the copolymerizable further monomer component, in the presence of a well-known Ziegler catalyst.

Examples of the Ziegler catalyst are (I) those which are constituted of an organoaluminium compound and a composite product containing at least magnesium, titanium and a halogen, (II) those which are constituted of an organoaluminium compound and a vanadium compound and (III) those which are constituted of a zirconium compound and an aluminoxane.

The description is now directed to the concrete procedures for the production of the cycloolefin random copolymer (A-a) using a catalyst composed of a soluble vanadium compound and an organoaluminium compound.

The soluble vanadium compound to be used as a component of the Ziegler catalyst in the production of the cycloolefin random copolymer (A-a) is soluble in the hydrocarbon medium of the copolymerization reaction system and has the formula

VO(OR)ₐX_{b}

or

V(OR)_{c}X_{d}

in which R represents a hydrocarbon radical, X is a halogen atom and the symbols a, b, c and d are such that:$\text{0 ≦ a ≦ 3, 0 ≦ b ≦ 3,}$$\text{2 ≦ a + b ≦ 3, 0 ≦ c ≦ 4}$$\text{0 ≦ d ≦ 4 and 3 ≦ c + d ≦ 4}$ and electron donating adducts thereof. More concretely, the followings may be exemplified for the vanadium compound:
VOCl₃, VO(OC₂H₅)Cl₂, VO(OC₂H₅)₂Cl, VO(O-iso-C₃H₇)Cl₂, VO(O-n-C₄H₉)Cl₂, VO(OC₂H₅)₃, VOBr₂, VCl₄, VOCl₂ and VO(O-n-C₄H₉)₃.

The organoaluminium compound may, for example, have at least one aluminium-carbon bond in the molecule, for example it may have the formula (i),

R¹ ₘAl(OR²)ₙHₚX_{q} (i)

in which R¹ and R² each denote, independently, a hydrocarbon radical, X denotes a halogen atom and m, n, p and q each represent a number such that 0≦ m ≦ 3, 0≦ n < 3, 0≦ p < 3, 0≦ q < 3 and m+n+p+q = 3, or an alkylated complex compound of aluminium with a metal of group 1 of the periodic table of formula (ii)

M¹Al(R¹)₄ (ii)

in which M¹ denotes an alkali metal U, Na or K and R¹ has the same meaning as that in formula (i).

Examples of the organoaluminium compound of formula (i) include compounds of formulae:

R¹ ₘAl(OR²)₃₋ₘ

{in which R¹ and R² are the same as those of formula (i) and m is preferably such that 1.5 ≦ m ≦ 3},

R¹ ₘAlX₃₋ₘ

{in which R¹ is the same as that of formula (i), X denotes a halogen atom and m is preferably such that 0 < m < 3},

R¹ ₘAlH₃₋ₘ

{in which R¹ is the same as that of formula (i) and m is preferably such that 2≦ m < 3} and

R¹ ₘAl(OR²)ₙX_{q}

{in which R¹ and R² are the same as those of formula (i), X is a halogen atom and m, n and q each are numbers such that 0< m ≦ 3, 0 ≦ n < 3, 0 ≦ q < 3 and m+n+q = 3}.

As a compound similar to that of formula (i), an organoaluminium compound in which two or more aluminium atoms are bound together through an oxygen atom or nitrogen atom can also be employed. Examples of such compounds include (C₂H₅)₂AlOAl(C₂H₅)₂, (C₄H₉)₂AlOAl(C₄H₉)₂ and (C₂H₅)₂AlN(C₆H₅)Al(C₂H₅)₂.

Concrete examples of the compounds of formula (ii) include LiAl(C₂H₅)₄ and LiAl(C₇H₁₅)₄.

The copolymerization is usually carried out in a hydrocarbon medium. For the hydrocarbon medium, aliphatic hydrocarbons, such as, hexane, heptane, octane and kerosene; cycloaliphatic hydrocarbons, such as, cyclohexane and methylcyclohexane; and aromatic hydrocarbons, such as, benzene, toluene and xylene; as well as the copolymerizable unsaturated monomer itself may be employed either solely or as a mixture of two or more.

The copolymerization is preferably carried out in a continuous process in which the concentration of the soluble vanadium compound to be supplied to the copolymerization reaction system may be below 10 times, preferably 7 to 1 times, more preferably 5 to 1 times, most preferably 3 to 1 times the concentration value for the soluble vanadium compound in the copolymerization raction system. The atom ratio of aluminium to vanadium (Al:V) in the copolymerization reaction system may be 2:1 or more, preferably 2:1 to 50:1, more preferably 3:1 to 20:1. The soluble vanadium compound and the organic aliminium compound are usually each supplied to the copolymerization reaction system under dilution with the above-mentioned hydrocarbon medium. It is desirable to dilute the soluble vanadium compound to a concentration within the above-mentioned concentration range, while the organoaluminium compound may be supplied to the system after its concentration has been adjusted to a desired value of, for example, 50 times or less the concentration thereof in the reaction (copolymerization) system. The concentration of the soluble vanadium compound in the reaction system may, in general, be 0.01 to 5 gram-atoms per liter, preferably 0.05 to 3 gram-atoms per liter.

It is permissible to carry out the copolymerization in the presence of, if necessary, an electron doner, in addition to the two catalyst components, namely, the above-mentioned soluble vanadium compound and the organoaluminium compound. As the electron doner, there may be employed oxygen-containing electron donating compounds, such as, alcohols, phenols, ketones, aldehydes, carboxylic acids, esters of organic or inorganic acids, ethers, acid amides, acid anhydrides and alkoxysilanes, and nitrogen-containing electron donating compounds, such as, ammonia, amines, nitriles and isocyanates.

The copolymerization may be carried out at a temperature of -50 to +100 °C, preferably -30 to +80 °C, more preferably -20 to +60 °C. The copolymerization is usually carried out in a continuous process, wherein the copolymerizable components, namely, ethylene, the cycloolefin monomer and, optionally, a further polymerizable component, are supplied to the copolymerization reaction system together with the catalyst components, i.e. the soluble vanadium compound and the organoaluminium compound, as well as the hydrocarbon polymerization medium, while extracting the copolymerization product mixture continuously from the reaction system. The average residence time during the copolymerization depends on each specific copolymerizable component employed, the concentration of the catalyst components and the reaction temperature, though it is usually from 5 minutes to 5 hours, preferably from 10 minutes to 3 hours. The pressure during the copolymerization is usually maintained to from atmospheric pressure to 50 Kg/cm² G or lower, preferably from atmospheric pressure to 20 Kg/cm² G or lower. It is permissible for an inert gas, such as nitrogen or argon, to co-exist. It is also permissible to employ a polymerization regulator, such as hydrogen, in an adequate manner, in order to adjust the molecular weight of the resulting copolymer.

The mole ratio of ethylene:cycloolefin supplied to the copolymerization reaction system is usually from 99:1 to 1:99, preferably from 98:2 to 2:98.

The reaction product of the copolymerization is a solution of the cycloolefin random copolymer in the hydrocarbon medium. Usually, the concentration of the cycloolefin random copolymer in this reaction solution is 2 to 20 % by weight, preferably 2 to 10 % by weight. By contacting this liquid reaction product with a ketone, such as, acetone, methyl ethyl ketone or acetylacetone, or with an alcohol, such as, methanol, ethanol or butanol with agitation at a temperature of, usually, 0 to 100°C, preferably 10 to 70°C, more preferably at a temperature near the boiling point of the ketone or alcohol employed, the cycloolefin random copolymer (A-a) is precipitated.

The cycloolefin random copolymer (A-a) is then separated by an appropriate separation means, such as filtration or centrifugation from the liquid mixture.

The polymerization may also be carried out using a catalyst system composed of a zirconium compound and an aluminoxane compound. One concrete example of such a catalyst system is composed of
(a) a zirconium compound having as the ligand at least two indenyl or substituted indenyl groups or partially hydrogenated groups thereof bonded via an alkylene group such as an ethylene group, and
(b) an aluminoxane.

The zirconium compound may have at least two indenyl or substituted indenyl groups or partially hydrogenated groups thereof, preferably two indenyl groups, two substituted indenyl groups, or two partially hydrogenated groups thereof.

Specific examples of the above zirconium compound include ethylenebis(indenyl)zirconium dichloride, ethylenebis(indenyl)zirconium monochloride monohydride, ethylenebis(indenyl)ethoxyzirconium chloride, ethylenebis(4,5,6,7-tetrahydro-1-indenyl)ethoxyzirconium chloride, ethylenebis(indenyl)dimethylzirconium, ethylenebis(4,5,6,7-tetrahydro-1 -indenyl)dimethylzirconium, ethylenebis(4-methyl-1-indenyl)zirconium dichloride and propylenebis(4,5,6,7-tetrahydro-1-indenyl)zirconium dichloride.

The aluminoxane used as component (b) of the catalyst may be for example, an organoaluminium compound of formula: 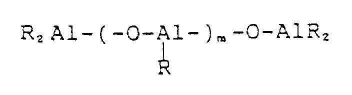 or 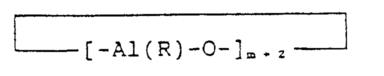 wherein R represents a hydrocarbon group such as a methyl, ethyl, n-propyl, isopropyl, n-butyl or isobutyl group, preferably a methyl, ethyl or isobutyl group, more preferably a methyl group and m is an integer of 2 or more, preferably 5 or more.

Using this catalyst system, the temperature in the polymerization reaction is usually -50 °C to 230 °C, preferably -30 °C to 200 °C.

The proportion of the zirconium compound used in carrying out the process in the liquid phase is usually 10⁻⁸ to 10⁻² gram-atom/l, preferably 10⁻⁷ to 10⁻³ gram-atom/l, as the concentration of the zirconium atoms in the polymerization reaction system. The proportion of the aluminoxane is usually 10⁻⁴ to 10⁻¹ gram-atom/l, preferably 10⁻³ to 5 x 10⁻² gram-atom/l, as the concentration of the aluminium atoms in the polymerization reaction system. The ratio of the aluminium atoms to the transition metal atoms in the polymerization system is usually from 4:1 to 10⁷:1, preferably from 10:1 to 10⁶:1. The molecular weight of the copolymer can be adjusted by using hydrogen, and/or adjusting the polymerization temperature.

The cycloolefin random copolymer (A-d) can also be produced in a similar manner as in the production of the cycloolefin random copolymer (A-a).

Concrete procedures of the production of the cycloolefin random copolymer (A-a) are disclosed in the literature, for example in Japanese Patent Application Kokai Nos. 168708/1985, 95905/1985, 95906/1985, 120816/1986, 115912/1986, 115916/1986, 271308/1986, 272216/1986, 252406/1987 and 252407/1987.

### The Cycloolefin Ring-Opened (co)Polymer (A-b)

It is permissible according to the present invention to employ a polymer or a copolymer obtained from a ring-opening polymerization of a cycloolefin(s) or the hydrogenation product thereof.

For the cycloolefinic monomer which constitutes the cycloolefin ring-opened (co)polyer (A-b), there is employed at least one cycloolefin of formula (1).

Examples of such cycloolefin ring-opened (co)polymers (A-b) are disclosed, for example, in JP-A-26024/1985.

The cycloolefin ring-opened (co)polymer (A-b) is composed of at least one of the structural units derived from the cycloolefin monomers of formulae (1), (1-1) and (2), in which at least a part of these structural units consists of the unit of one of the formulae (1-b), (1-1-b) and (2-b):

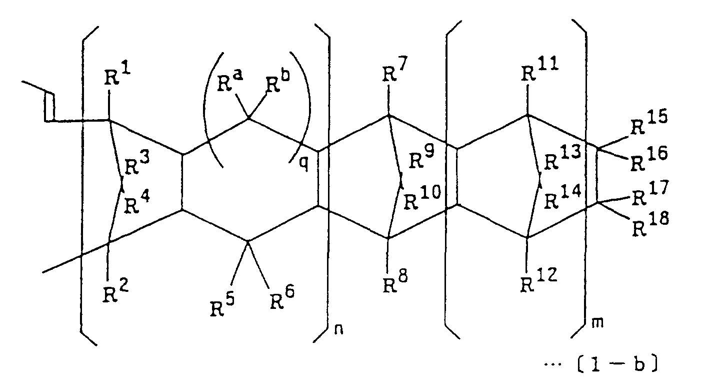

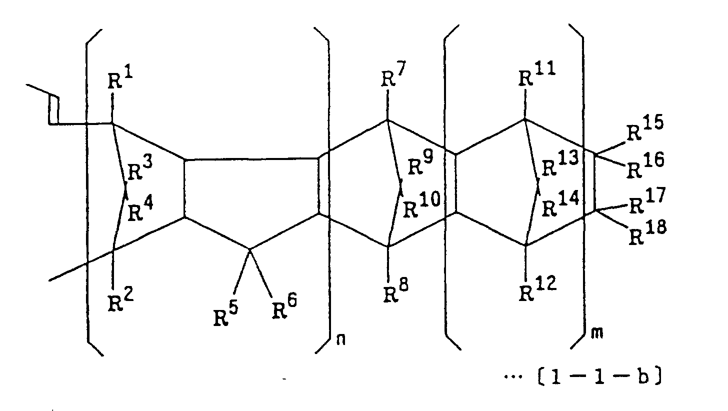

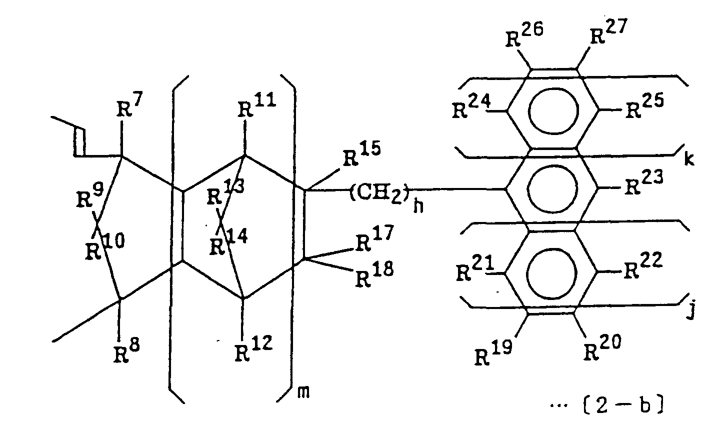

In formulae (1-b) and (1-1-b), the symbols n, m, q, R¹ to R¹⁸, R^{a} and R^{b} have the same meanings as those in formula (1) and the symbols m, h j, k, R⁷ to R¹⁵ and R¹⁷ to R²⁷ in formula (2-b) have the same meanings as those of formula (2).

The hydrogenation product of the ring-opened (co)polymer (A-b) is obtained by hydrogenating the above-mentioned ring-opened (co)polymer in the presence of a known hydrogenation catalyst.

In the hydrogenation product of the ring-opened (co)polymer (A-b), at least one of the structural units derived from the cycloolefin monomers of formulae (1), (1-1) and (2) has either one of the structures of formulae (1-c), (1-1-c) and (2-c):

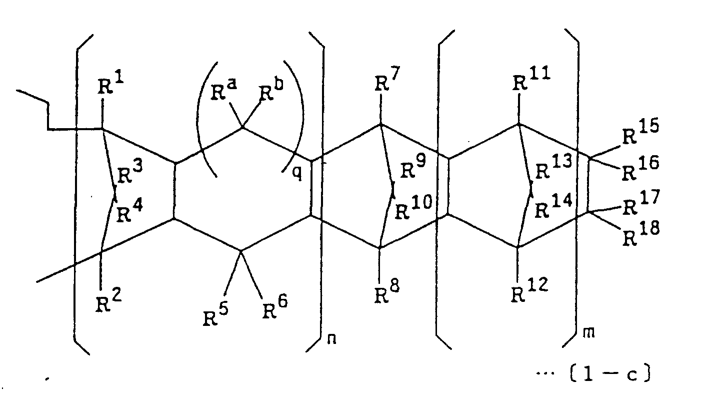

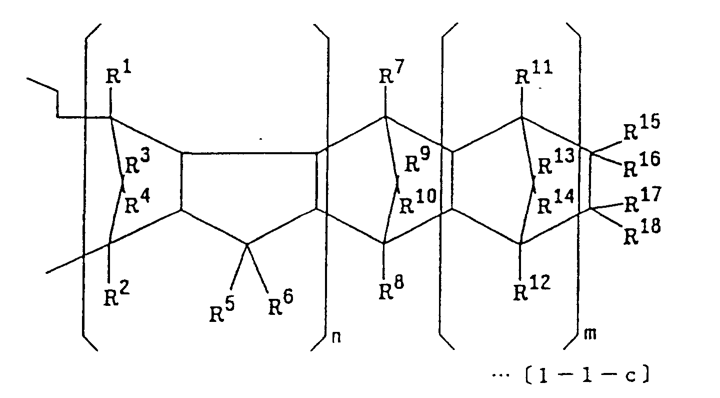

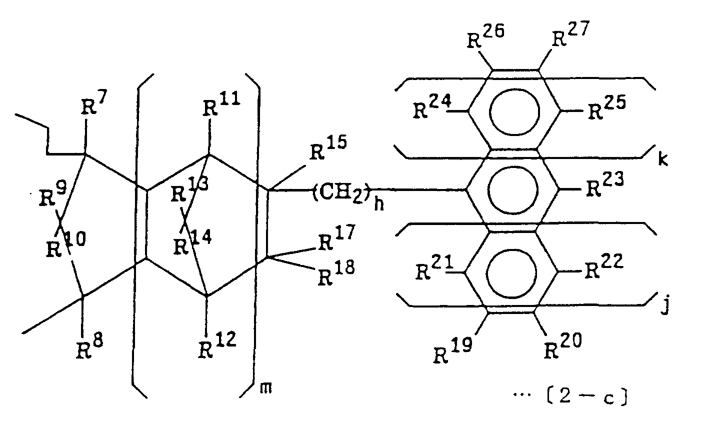

The symbols n, m, q, R¹ to R¹⁸, R^{a} and R^{b} in formulae (1-c) and (1-1-c) have the same meanings as those of formula (1) and the symbols m, h, j, k, R⁷ to R¹⁵ and R¹⁷ to R²⁷ in formula (2-c) have the same meanings as those of formula (2).

The cycloolefin ring-opened (co)polymer (A-b) should contain at least one of the above-mentioned cycloolfin monomers as an essential component. It is permissible that copolymerizable unsaturated further monomer component(s) may, if necessary, be incorporated in an amount within a range not obstructing the purpose of the invention. As the copolymerizable unsaturated further monomer, there may be enumerated, for example, cycloolefin compounds of formula (3): 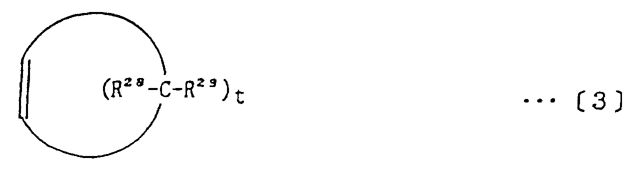 in which R²⁸ and R²⁹ each represent a hydrogen atom, a hydrocarbon group or a halogen atom, which may be identical or different from each other, and t is an integer of 2 or higher, and may be different when R²⁸ and R²⁹ are present several times.

Concrete examples of the monomer of formula (3) include cyclobutene, cyclopentene, cyclohexene, cycloheptene, cyclooctene, cydononene, cyclodecene, methylcyclopentene, methylcyclohexene, methylcydoheptene, methylcyclooctene, methylcyclononene, methylcyclodecene, ethylcyclopentene, ethylcyclobutene, ethylcyclooctene, dimethylcyclopentene, dimethylcyclohexene, dimethylcycloepetene, dimethycyclooctene, trimethylcyclodecene and 2-(2-methylbutyl)-1-cyclohexene.

Concrete examples of the copolymerizable unsaturated further monomer other than those of formula (3) include cycloolefins, such as, 2,3,3a,7a-tetrahydro-4,7-methano-1H-indene and 3a,5,6,7a-tetrahydro-4,7-methano-1H-indene.

These copolymerizable unsaturated further monomers may be employed alone or in combination, usually in an amount less than 50 mole %, based on the total moles of the monomer units in the molecule of the cycloolefin ring-opened (co)polymer (A-b).

The intrinsic viscosity [η] of the cycloolefin ring-opened (co)polymer (A-b) determined in decalin at 135°C is 0.01 to 10 dl/g, preferably 0.05 to 5 dl/g, and the softening temperature (TMA) in from 50 to 200°C, preferably from 60 to 200 °C.

Preferred cycloolefin ring-opened (co)polymers (A-b) have iodine values of 0 to 200, preferably 0 to 60, and crystallinities determined by the X-ray diffraction method of 0 to 10 %, preferably 0 to 7 %, more preferably 0 to 5 %.

According to the present invention, the cycloolefin ring-opened (co)polymer (A-b) can be employed alone or in combination with the above-mentioned cycloolefin random copolymer (A-d) as a non-crystalline polyolefin resin mixture (in the following, denoted sometimes as "the resin mixture B"). The mixing ratio of these polymers may be the same as that of the resin mixture A.

For producing the ring-opened (co)polymer (A-b) an appropriate monomer component of formula (1) is subjected to a conventional ring-opening (co)polymerization to realize the ring-opening (co)polymerization. The polymerization catalyst may be a combined catalyst system composed of a halogenide, nitrate or an acetylacetone compound of a metal, such as, ruthenium, rhodium, palladium, osmium, iridium, platinum, molybdenum and tungsten, with a reducing agent, such as, an organotin compound or an alcohol; or a combined catalyst system composed of a halogenide or an acetylacetone compound of a metal, such as, titanium, vanadium, zirconium, tungsten and molybdenum with a reducing agent, such as an organoaluminium compound.

The molecular weight of the polymerized ring-opened (co)polymer can be adjusted by adding a polymerization regulator, such as an olefin, during the ring-opening (co)polymerization.

For producing the hydrogenation product of the ring-opened (co)polymer, a conventional hydrogenation process can be employed. Hydrogenation catalysts which are used for the hydrogenation of olefin compounds can in general be employed. Concrete examples of the hydrogenation catalyst include metals, such as, nickel, palladium, platinum and a solid catalyst prepared by supporting these metals on an appropriate carrier, such as, carbon, silica, diatomaceous earth, alumina and titanium oxide. Concrete examples therefor include nickel/silica, nickel/diatomaceous earth, palladium/carbon, palladium/silica, palladium/diatomaceous earth and palladium/alumina, for the heterogeneous catalyst, and those based on a metal of the group VIII of the periodic table, such as, those composed of a compound of Ni or Co with an organometallic compound of a metal of group I - group III of the periodic table, for example, nickel naphthenate/triethylaluminium, cobalt octenate/n-butyllithium and nickel acetylacetonate/triethylaluminium, and rhodium compounds, for the homogeneous catalyst.

The hydrogenation of the ring-opened (co)polymer can be carried out in a homogeneous or heterogeneous system in accordance with the specific catalyst employed under a hydrogen pressure of 1 to 150 atm and at a temperature of 0 to 180 °C, preferably 20 to 100 °C. While the hydrogenation yield can be adjusted by, for example, the hydrogen pressure, reaction temperature, reaction duration and catalyst concentration, it is preferable that 50 % or more, more preferably 80 % or more, even more preferably 90 % or more of the double bonds existing in the main chain of the polymer are subjected to the hydrogenation, in order to reach superior fastnesses to thermal deterioration and to light-deterioration of the so-obtained hydrogenation product.

### The Graft-Modified Product (A-c)

According to the present invention, it is permissible to employ a graft-modified product of the copolymer (A-a) or of the cycloolefin ring-opened (co)polymer (A-b). Examples of the graft-modified product (A-c) include those obtained by the use of a modifying agent, such as, unsaturated carboxylic acids, unsaturated carboxylic acid anhydrides and derivatives thereof.

Examples of the unsaturated carboxylic acid are acrylic acid, methacrylic acid, α-ethylacrylic acid, maleic acid, fumaric acid, itaconic acid, citraconic acid, tetrahydrophthalic acid, methyl tetrahydrophthalic acid, endosis-bicyclo[2.2.1]hept-5-ene-2,5-dicarboxylic acid (Nadic acid: trademark) and methyl-endosis-bicyclo[2.2.1]hept-5-ene-2,5-dicarboxylic acid (methyl-Nadic acid: trademark). Examples of the unsaturated carboxylic acid anhydride are maleic anhydride, citraconic anhydride, Nadic acid anhydride and methyl-Nadic acid anhydride. Examples of the derivatives of unsaturated carboxylic acid are acid halides of the above-mentioned unsaturated carboxylic acids (such as maleyl chloride), imides of the above-mentioned unsaturated carboxylic acids (such as maleimide) and esters of the above-mentioned carboxylic acids (such as monomethyl maleate, dimethyl maleate and glycidyl maleate). Among these, maleic anhydride and Nadic acid anhydride are preferred. These modifying agents can be used alone or in combination.

The content of the modifying agent, such as an unsaturated carboxylic acid, contained in the graft-modified product (A-c) may be from 0.01 to 10 % by weight, preferably from 0.03 to 5 % by weight. A mixture of the modified product with unmodified polymer may be used, in which it is possible that a modified product of higher modified proportion having a modifying agent content of, for example, over 10 % by weight is mixed with the unmodified polymer in a proportion adapted for attaining the above-mentioned modifying agent content of the mixture.

Preferred graft-modofied products (A-c) have an intrinsic viscosity [η] determined in decalin at 135 °C and a softening temperature corresponding to the preferable range as given for the unmodified polymer, with the iodine value, glass transition temperature and the crystallinity preferably being in the same range as those of the above-mentioned unmodified polymer.

Examples for realizing the modification of the cycloolefin random copolymer (A-a) or the cycloolefin ring-opened (co)polymer (A-b) using a modifying agent, are a method in which the unmodified polymer is melted and the modifying agent, such as an unsaturated carboxylic acid, is added thereto, a method in which the unmodified polymer is suspended or dissolved in a solvent and the modifying agent is added thereto, a method in which both the unmodified polymer and the modifying agent are dissolved in a solvent and the reaction is then carried out and a method in which the unmodified polymer and the modifying agent are reacted in the state of a finely disintegrated solid, such as powder.

During the modification reaction, the modifying agent is grafted to the cycloolefin random copolymer (A-a) or the cycloolefin ring-opened (co)polymer (A-b) to obtain the modified product. There is no limitation as to the position of the grafting by the modifying agent in the cycloolefin random copolymer (A-a) or the cycloolefin ring-opened (co)polymer (A-b). The modifying agent is only required to be combined to a voluntary carbon atom in the polymer (A-a) or (A-b).

In all the above-mentioned methods, it is preferable to carry out the graft reaction in the presence of a radical initiator, in order to attain an efficient reaction (graft polymerization) of the modifying agent (the grafting monomer). Examples of the radical initiator are organic peroxides, organic peresters and azo-compounds.

It is preferable to use the radical initiator in an amount of 0.001 to 1 part by weight per 100 parts by weight of the unmodified polymer.

The reaction temperature for the grafting with or without the radical initiator is preferably 60 to 350 °C.

By carrying out the modification of the cycloolefin random copolymer (A-a) or the cycloolefin ring-opened (co)polymer (A-b), the ability of the resulting sheet or film to be subjected to heat sealing onto the sealing material, such as an aluminium foil, is improved. Since the processibility of the resulting sheet or film product is also increased, narrower "flange" portions surrounding each blister can be used due to the ability to attain a more sharp forming around the blister upon vacuum or pneumatic forming of the blisters for receiving each of the articles to be packed therein. Thus the number of blisters to be formed on one and the same sheet or film can be increased, due to the attainment of narrower interstitial flange portions.

Among the non-crystalline polyolefin resins (A-a) to (A-c) the cycloolefin random copolymer (A-a) and the modified product thereof (A-c) are preferred in view of the transparency and the processibility by vacuum or pneumatic forming;. The modified product (A-c) is in particular preferable in view of the processibility by vacuum or pneumatic forming and of the ability to be subjected to heat sealing.

It is permissible to employ two or more of the above-mentioned non-crystalline polyolefin resins (A-a) to (A-c) (these are denoted hereinafter as essential components) in combination. It is also permitted to incorporate optionally other subsidiary components each in an amount within a range such that the purpose of the invention is not obstructed. Examples of such components are an impact strength-improving rubber, other resins and various additives, such as, a heat stabilizer, climate stabilizer, photostabilizer, antistatic agent, slip agent, antiblocking agent, anticlouding agent, nucleating agent, lubricant, dyestuff for absorbing a ray of a special wavelength, pigment, natural petroleum, synthetic oil, wax and light-permeable filler.

Concrete examples of the optionally incorporated stabilizer include phenolic antioxidants, such as, tetrakis[methylene-3-(3,5-di-t-butyl-4-hydroxyphenyl)-propionate]-methane, alkyl esters of β-(3,5-di-t-butyl-4-hydroxyphenyl)-propionic acid and 2,2'-oxamide-bis[ethyl-3(3,5-di-t-butyl-4-hydroxyphenyl)-propionate; fatty acid metal salts, such as, zinc stearate, calcium stearate and calcium 12-hydroxystearate; and fatty acid esters of polyols.

These subsidiary components may be incorporated either alone or in combination. Examples of such a combination are tetrakis[methylene-3-(3,5-di-t-butyl-4-hydroxyphenyl)-propionate]-methane with zinc stearate and with glycerin monostearate.

A preferred combination is a phenolic antioxidant with a fatty acid ester of a polyol. Examples of the fatty acid ester of a polyol are a partial ester of a polyol in which a part of the alcoholic hydroxyl groups of a trivalent or higher polyhydric alcohol is esterified by fatty acid(s).

Concrete examples of such fatty acid esters of polyols include fatty acid esters of glycerin, such as, glycerin monostearate, glycerin monolaurate, glycerin monomyristate, glycerin monopalmitate, glycerin distearate and glycerin dilaurate; fatty acid esters of pentaerithritol, such as, pentaerithritol monostearate, pentaerithritol monolaurate, pentaerithritol distearate and pentaerithritol tristearate. These fatty acid esters may be employed either alone or in combination with each other.

The phenolic antioxidant is preferably employed in an amount of less than 10 parts by weight, more preferably less than 5 parts by weight, even more preferably less than 2 parts by weight per 100 parts by weight of the total sum of the essential components.

The fatty acid ester of a polyol is preferably be used in an amount of less than 10 parts by weight, more preferably less than 5 parts by weight, per 100 parts by weight of the total sum of the essential components.

### Crystalline Polyolefin Resin (B)

A crystalline polyolefin resin (B) may be employed as a material for another sheet or film to be laminated on the sheet or film of the non-crystalline polyolefin resin (A).

The crystalline polyolefin resin (B) usually has a degree of crystallinity of 10 % or higher, preferably 15 % or higher, determined by the X-ray diffraction method.

Examples of the crystalline polyolefin resin (B) are homopolymers of α-olefins having 2 to 12 carbon atoms, copolymers of one such α-olefin with, for example, less than 10 mole %, preferably less than 6 mole %, of another α-olefin(s) and mixtures of these crystalline polyolefins. Preferable examples include crystalline polypropylene resins and mixtures of polypropylene resins (B-e) composed of such crystalline polypropylene resins with polyethylene resins having a density of at least 0,930 g/cm³.

Since these crystalline polyolefin resins themselves have a lower compatibility with the above-mentioned non-crystalline polyolefin resin (A) and are not adapted for use for the production of a laminated sheet or film by a co-extrusion method, it is necessary to produce such a laminated sheet or film by dry lamination of a sheet or film of the non-crystalline polyolefin resin (A) with a sheet or film of the crystalline polyolefin resin (B) using an adhesive. In contrast thereto, a mixture of polyolefins of different crystallinity, especially the above-mentioned crystalline polypropylene resin mixture (B-e), exhibits an improved compatibility with the non-crystalline polyolefin resin (A) and can be processed by co-extrusion to obtain a laminate.

The crystalline polypropylene resin incorporated as one component of the above-mentioned crystalline polypropylene resin mixture (B-e) is preferably a homopolymer of propylene or a copolymer of propylene with another α-olefin having a propylene content of 90 mole % or higher, preferably 94 mole % or higher, and having a melt flow rate at 230°C of 0.05 to 100 g/10 min., preferably 0.5 to 50 g/10 min., a density of 0.89 to 0.93 g/cm³, preferably 0.90 to 0.92 g/cm³, and a thermal deformation temperature under a load of 4.6 kg/cm² of 90 to 140°C, preferably 100 to 130 °C.

Examples of the other α-olefin to be copolymerized with propylene are ethylene and α-olefins having 4 to 14 carbon atoms, preferably 4 to 10 carbon atoms, such as, ethylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene and 1-tetradecene.

Examples of the polyethylene resin to be incorporated as the other component of the crystalline polypropylene resin mixture (B-e) are homopolymers of ethylene or copolymers of ethylene with another α-olefin having an ethylene content of 90 mole % or higher, preferably 95 mole % or higher, and having a density of 0.930 g/cm³ or higher, preferably 0.940 to 0.980 g/cm³. It is preferable for such polyethylene resin to have a melt flow rate at 190°C of 0.01 to 100 g/10 min., preferably 0.03 to 50 g/10 min, and a Vicat softening point of 110 to 140°C, preferably 115 to 130 °C.

Examples of the other α-olefin to be co-polymerized with ethylene include those which have 3 to 14 carbon atoms, preferably 3 to 10 carbon atoms, such as, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene and 1-tetradecene.

The mixing proportion of the crystalline polypropylene resin and the polyethylene resin is desirably 90 - 40:10 - 60, preferably 85 - 50:15 - 50, in the weight ratio of polypropylene resin: polyethylene resin.

The crystalline polypropylene resin mixture (B-e) may contain, in addition to the crystalline polypropylene resin and the polyethylene resin, other additives in an amount not obstructing the purpose of the invention, for example, an impact strength improving rubber, other resins and various additives, such as, a heat stabilizer, climate stabilizer, photostabilizer, antistatic agent, slip agent, antiblocking agent, anticlouding agent, nucleating agent, lubricant, dyestuff for absorbing a ray of a special wavelength, pigment, natural petroleum, synthetic oil, wax and light-permeable filler.

The crystalline polypropylene resin mixture (B-e) can be produced by a known method, for example by mixing the resin components in, for example, a Henschel mixer, V-blender, ribbon blender or tumbler blender; or by mixing the resin components followed by melt-kneading the mixture in, for example, a monoaxial extruder, biaxial extruder or kneader, and then granulating or crushing the resulting mass.

The sheet or film is prepared by (1) processing the non-crystalline polyolefin resin (A) or a blend of this with other optionally added subsidiary components into a sheet or film, or by (2) laminating the sheet or film produced in this manner with another sheet or film made of the crystalline polyolefin resin (B) or mixture of this resin (B) with optionally incorporated further components. Such lamination can be effected, for example, in a lamination sequence of crystalline resin (B) layer/non-crystalline resin (A) layer/crystalline resin (B) layer; non-crystalline resin (A) layer/crystalline resin (B) layer/non-crystalline resin (A) layer; or crystalline resin (B) layer/non-crystalline resin (A) layer. Among these, the sequence in which the non-crystalline resin layer is sandwiched between two layers of crystalline resin layer, namely, crystalline resin (B) layer/non-crystalline resin (A) layer/crystalline resin (B) layer, is preferred.

While the non-crystalline polyolefin resin (A) has excellent transparency, moistureproof property, processibility by vacuum or pneumatic forming and dead hold property, it suffers from the phenomenon of sudden softening at around the glass transition temperature, resulting in a decrease of the elastic modulus and strength due to its non-crystalline nature. Therefore, a single layer sheet or film made of only the non-crystalline polyolefin resin (A) exhibits a somewhat narrower flexibility when processing by inflation molding or vacuum or pneumatic forming and also has inferior heat sealing ability. However, such disadvantage can be remedied by, as described above, laminating the sheet or film of the non-crystalline resin (A) with a further sheet or film made of the crystalline polyolefin resin (B). Moreover, the processibility and the heat sealing ability can be improved by incorporating a graft-modification of the non-crystalline polyolefin resin (A). The improvement of the processibility by the graft-modification is higher when the sheet or film of the non-crystalline polyolefin resin (A) is laminated with the sheet or film of the crystalline polyolefin resin (B), while the improvement in the heat sealing ability is higher for the sole employment of the sheet or film of the graft-modified product (A-c).

For processing the sheet or film of the polymer material into a formed (blistered) product for packging, it is necessary to soften the polymer material of the sheet or film at a temperature above the softening temperature thereof. The processibility of the sheet or film by vacuum or pneumatic forming is improved for the laminated sheet or film, as compared with the monolayer sheet or film, since, for example, the externally placed sheet or film of the crystalline polyolefin resin (B) does not yield to the forming action due to its retained stiff consistency even at a temperature at which the interposed layer of non-crystalline resin (A) has been softened. For this reason, the edge portions of each blister on the resulting profiled material are shaped very sharply, so that the interstitial flange portions between the blisters can be designed to be more narrow. Thus the number of blisters on one and the same sheet or film can be increased.

While there is no special limitation as to the thickness of the sheet or film, a thickness of 150 to 5,000 µm, especially 200 to 1,000 µm is preferable, since a sufficient moistureproof property can be attained with such a thickness, even for a PTP or a blister package for packaging a drug necessitating a high moistureproof property.

The monolayer sheet or film can be produced by an ordinary method for producing a monolayer sheet or film, for example, by using a T-die or by inflation molding. The laminated sheet or film can be prepared by a conventional method for preparing a multilayer sheet or film, for example, by dry-lamination and by a co-extrusion molding, such as, molding using a multilayer T-die and multilayer inflation molding. The resulting sheet or film is used as such, without subjecting it to a stretching step, for producing a blistered formed product for a PTP or blister package. If the monolayer or multilayer sheet or film has been subjected to a monoaxial or a biaxial stretching, the processibility of the resulting sheet or film by vacuum or pneumatic forming becomes worse and, thus, the productivity will be decreased due to the lower forming velocity and increased rate of occurrence of rejects, so that the sheet or film is employed without subjecting it to a stretching step. A stretched sheet or film exhibits a further disadvantage of occurrence of shrinkage upon vacuum forming due to the elevation of the surface temperature above the softening temperature. Also for this reason it does not adapt to processing by vacuum forming.

A further improvement in the processibility and adaptability of the sheet or film may be provided by coating the sheet or film with a layer of vinylidene chloride or other resins.

In laminating the sheet or film of non-crystalline polyolefin resin (A) with a sheet or film having a lower compatibility therewith, such as the crystalline polyolefin resin (B), co-extrusion is difficult, so that they should be laminated by a dry lamination using an adhesive. However, in laminating the sheet or film of the non-crystalline polyolefin resin (A) with the sheet or film of the crystalline polypropylene resin mixture (B-e), co-extrusion can be applied.

The sheet or film has an excellent moisturproof property and transparency and also has superior processibility by vacuum or pnuematic forming, so that it can be used for the material for a PTP or blister package with a satisfactory performance. The sheet or film is processed by vacuum or pneumatic forming to form blisters each having a configuration adapted to fit to the contour of each article to be packed in a PTP or blister package. For processing the sheet or film by vacuum or pnuematic forming, the same conditions as in a conventional processing may be employed. Thus a surface temperature of the sheet or film of 30 to 300°C, preferably 50 to 150 °C, and a forming pressure of 0.2 to 20 kg/cm² G, preferably 0.2 to 10 kg/cm² G, may be employed.

The PTP or blister package according to the present invention comprise the above-mentioned formed product having formed thereon blisters by vacuum or pneumatic forming made from the above described sheet or film and a sealing element employed in association therewith. The formed product has blisters formed thereon with a contour adapted to fit to each article to be packed therin with the portion surrounding each blister constituting a flange. The package is sealed by bonding the flange to the sealing element by heat sealing or by using an adhesive.

The actual procedure of packaging the articles to be packaged by a PTP or blister package according to the present invention comprises placing the articles to be packaged in the blister cavities of the formed product, covering the resulting formed product having the articles received in the blister cavities with a flat sealing element and sealing the package by heat sealing or by gluing with an adhesive the flange portions surrounding each blister onto the sealing element.

The usual sealing element for a general blister package is a supporting pape, although another pertinent material may also be used. In the case of a PTP, an aluminium foil is usually employed. It is also possible to use an aluminium foil which has been coated with a thin layer of the non-crystalline polyolefin resin (A) in order to improve the moistureproof property and the heat sealing ability. It is also possible to use a sheet or film of a non-crystalline polyolefin resin as used in the present invention as the element, instead of using an aluminium foil.

In some cases, a difficulty may occur upon heat sealing of the formed product together with the sealing element due to the insufficient heat sealing ability of the non-crystalline polyolefin resins (A-a) and (A-b). On the other hand, the heat sealing can be realized easily for a sheet or film of the graft-modified product (A-c), since it has improved heat sealing ability as mentioned above. Therefore, the heat sealing of the sheet or film onto the sealing element can be rendered easy when at least either one of the formed product and the sealing element is made of the graft-modified product (A-c).

If the graft-modified product (A-c) is not employed for both the formed product and the sealing element, for example, when the formed product is made of the non-crystalline polyolefin resin (A-a) or (A-b) and the sealing element is a supporting paper or an aluminium foil, the sealed package can be produced by gluing them both together using an adhesive. In such a case heat sealing can easily be carried out when a layer of the graft-modified product (A-c) or other heat sealable resin is coated on the supporting paper or aluminium foil.

Due to the excellent moistureproof property and transparency of the sheet or film used in the present invention, use of the PTP or blister package prepared therefrom can increase the commercial value of the articles packed therein.

Articles such as drugs, food products, household commodities and mecellaneous goods, in particuler, pelletized and encapsulated drugs, food products such as rice cakes, snacks and cookies, and moisture-absorbing articles such as cigarettes and tea bags, can be packaged with better preservation of the moistureproof property and transparency in the PTP or blister package of the present invention.

As described above, the sheet or film made from the material with the essential components according to the present invention can provide a PTP or blister package having an excellent moistureproof property and transparency together with a superior processibility by vacuum or pneumatic forming, due to the employment of the special non-crystalline polyolefin resin (A).

In addition, by laminating the sheet or film of the non-crystalline polyolefin resin (A) with another sheet or film made of the crystalline polyolefin resin (B), there is increased flexibility in selecting the conditions for the processing by vacuum or pneumatic forming or inflation molding and for effecting the heat sealing and a simultaneous increase in the number of blisters which can be formed on the same sheet or film.

The PTP or blister package according to the present invention has an excellent moistureproof property and transparency due to the employment of the sheet or film mentioned above.

The present invention will now be further described in the following Examples with reference to the appended Drawings.

In Figs. 1 to 4, various modes of packaging articles using the formed product according to the present invention as shown, each in a sectional view. In the Figures, the numeral 1 represents the package according to the present invention composed of a formed product 2 and a sealing element 3, with which articles 4 are packaged.

In the package 1 of Fig. 1, the formed product 2 is made of the cycloolefin random copolymer (A), in which a plurality of blisters 5 each having a size and contour adapted to receive each article 4 and corresponding flange portions 6 surrounding each blister 5 are formed.

The sealing element 3 is constituted of an aluminium foil 7 having thereon a coated layer 8 of heat sealable resin consisting mainly of the graft-modified product (A-c) and is arranged with its heat sealable layer 8 facing the formed product 2 to couple to the formed product 2.

In the package 1, the articles 4 are accomodated in each blister cavity with the flange portions 6 of the formed product 2 and the corresponding portions of the heat sealable layer 8 on the sealing element being bonded together in tight seal by heat sealing.

The package 1 is prepared by placing each article 4 in the cavity of the blister 5 of the formed product 2, and covering them with the sealing element 3 and bonding the flange portions 6 with the corresponding portions of the heat sealable resin layer 8 by heat sealing.

The package 1 of Fig. 2 is composed of a formed product 2 made of the graft-modified product(A-c) and a sealing element 3 consisting of an aluminium foil 7. The formed product 2 has in itself a heat sealable nature and, therefore, the flange portions 6 are bonded directly to the aluminium foil 7 by heat sealing.

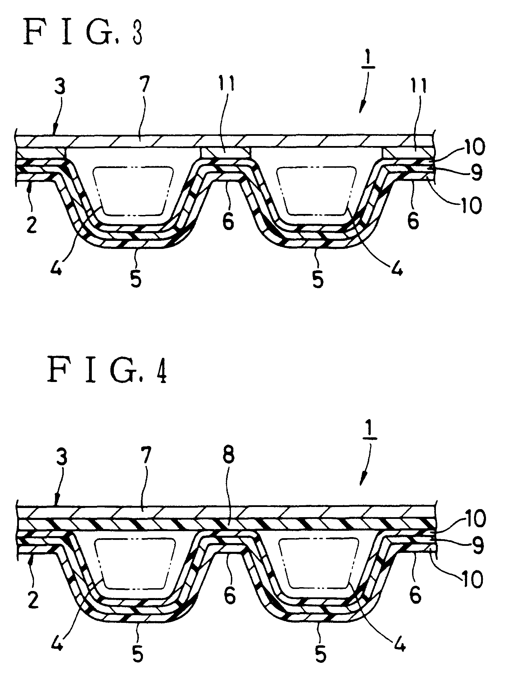

The package 1 of Fig. 3 is composed of a formed product 2 prepared from a laminated sheet and of a sealing element 3 consisting of an aluminium foil 7. The formed product 2 is prepared from a laminate of a layer 9 of the non-crystalline polyolefin resin (A) sandwiched between two externally disposed layers 10 of crystalline polyolefin resin (B). The formed product 2 and the aluminium foil 7 are bonded together using an adhesive 11.

The package 1 of Fig. 4 is constituted of a formed product 2 which is prepared from a laminate composed of a layer 9 of the non-crystalline polyolefin resin sandwiched between two externally disposed layers 10 of the crystalline polyolefin resin, on the one hand, and a sealing element 3 which is made of an aluminium foil 7 having coated thereon a layer 8 of a heat sealable resin, on the other hand, bonded together by heat sealing.

### Example 1

A copolymer of ethylene and 8-ethyltetracyclo-[4.4.0.1^{2'5}.1^{7'10}]-3-dodecene [a cycloolefin monomer of formula (1) in which n = 0, m = 1, q = 0, R⁷ to R¹⁴ and R¹⁶ to R¹⁸ each are hydrogen and R¹⁵ is ethyl; which is referred to in the following as ETCD-3] having an intrinsic viscosity [η] of 0.68 dl/g, a softening temperature (TMA) of 88 °C and a Tg of 70 °C was used as the starting material. This starting material was processed into a sheet having a thickness of 0.25 mm by T-die molding using an extruder of 30 mm⌀. The physical properties including the moistureproof property and transparency were determined for the thus-obtained sheet. The results are summarized in Table 1.

### Example 2

A copolymer of ethylene and ETCD-3 having an intrinsic viscosity [η] of 0.77 dl/g, a softening temperature (TMA) of 60 °C and a Tg of 45 °C was used as the starting material. This starting material was processed into a sheet having a thickness of 0.25 mm by T-die molding using an extruder of 30 mm ⌀. The physical properties including the moistureproof property and transparency were determined for the thus-obtained sheet in the same manner as in Example 1. The results are summarized also in Table 1.

### Comparative Example 1

A polypropylene having an intrinsic viscosity [η] of 3.0 dl/g was employed as the starting material. This starting material was processed into a sheet having a thickness of 0.25 mm using the same apparatus as that employed in Example 1. The physical properties including the moistureproof property and transparency were determined for the thus-obtained sheet in the same manner as in Example 1. The results are summarized also in Table 1.

### Example 3

To 100 parts by weight of a pelletized product of the copolymer of ethylene/ETCD-3 employed in Example 1, 1 part by weight (calculated as maleic acid) of maleic anhydride in a form of an acetone solution and 0.2 parts by weight of a peroxy compound [Perhexin 25B (trademark) of Nippon Oil and Fats Co.] were admixed homogeneously and the resulting mixture was processed in a biaxial extruder at a cylinder temperature of 230 °C to effect a modification by maleic anhydride grafting.

95 parts by weight of the unmodified copolymer of ethylene/ETCD-3 and 5 parts by weight of the graft-modified pelletized product of the ethylene/ETCD-3 copolymer obtained as above (with a grafted amount of maleic anhydride of 0.7 % by weight) were mixed together and the resulting mixture was processed in the same manner as in Example 1 to prepare a sheet having a thickness of 0.25 mm. The physical properties of the resulting sheet were determined in the same manner as in Example 1. The heat sealing ability of this sheet with an aluminium foil was also examined. The heat sealing ability was assessed by the heat seal strength under the following test conditions. The results are summarized in Table 1 below.

### Test Conditions for Heat Seal Strength

| | |
|---|---|
| Aluminium foil | 100 µm thickness, with no surface treatment |
| Heat sealing | hot plate temperature of 240 °C, with pressing time of 0.5 s. |
| Bonding strength | a heat sealed laminate of ethylene-ETCD-3 sheet/aluminium foil was cut to form elongated ribbons of 20 mm width and a T-peeling test was carried out by peeling the laminate from one end of the ribbon at a peeling velocity of 50 mm/min. to determine the peel strength. |

### Example 4

Laminated sheets were produced, for which the physical properties were determined.

For the non-crystalline polyolefin resin (A), the copolymer of ethylene/ETCD-3 employed in Example 1 was used. For the crystalline polyolefin resin (B), a crystalline polypropylene resin mixture (B-e) was employed, which was obtained by melt-blending a polypropylene product having a melt flow rate at 230 °C (determined according to ASTM D 1238) of 7.2 g/10 min., a density (determined according to ASTM D 1505) of 0.91 g/cm³, a degree of crystallinity determined by the X-ray diffraction method of 58 % and a thermal deformation temperature under a load of 4.6 kg/cm² (determined according to ASTM D 648) of 112 °C with a polyethylene product having a melt flow rate at 190°C of 5.5 g/10 min., a density of 0.968 g/cm³ and a Vicat softening point (determined according to ASTM D 1525) of 125 °C in a weight mixing proportion of polypropylene/polyethylene of 6:4 in an extruder.

From the above starting materials, an extrusion laminated sheet having binary resin triple layers with a lamination sequence of [layer of crystalline resin mixture (B)]/[layer of ethylene-ETCD-3 copolymer (A)]/[layer of crysralline polypropylene resin mixture (B-e)] was produced by T-die co-extrusion. The thickness of each layer was 200 µm for the (A) layer and 50 µm for both the (B) layers.

### Conditions of Molding

| | |
|---|---|
| Molding apparatus | binary resin triple layer extruder |
| Screws | gradual compression full flight type of 40 mm diameter, with L/D = 24, for the non-crystalline polyolefin resin (A); and gradual compression full flight type of 30 mm diameter, with L/D = 24, for the crystalline polypropylene resin mixture (B) |
| Cylinder temp. | 200 °C for the non-crystalline resin (A) and 200 °C for the crystalline polypropylene resin mixture (B) |
| Die | T-die, multimanifold type |

The physical properties of the resulting laminated sheet were determined in the same manner as in Example 1. The heat sealing ability was also assessed for this laminated sheet in association with the sealing element in the same manner as in Example 3. For the sealing element, an aluminium foil having a thickness of 100 µm and coated with a layer of maleic anhydride-modified polypropylene (with maleic anhydride content of 0.4 % by weight) was employed. The results are also summarized in Table 1.

**Table 1**

| Parameter | Example 1 | Example 2 | Comp. Ex. 1 | Example 3 | Example 4 |
|---|---|---|---|---|---|
| [η] of Ethylene/ETCD-3 (dl/g) | 0.68 | 0.77 | 3.0 | 0.68 | 0.68 |
| | | | | | |
| Tg of Ethylene/ETCD-3 (°C) | 70 | 45 | - | 70 | 70 |
| | | | | | |
| Sheet thickness (mm) | 0.25 | 0.25 | 0.25 | 0.25 | 0.25 |
| | | | | | |
| Haze (%) | 1.3 | 1.5 | 34.7 | 3.2 | 15 |
| | | | | | |
| Light permeability (%) | 92 | 92 | 91 | 92 | 92 |
| | | | | | |
| Moisture permeability at 40 °C, 90% r.h. (g/m² · 24 hr) | 0.35 | 0.36 | 1.12 | 0.36 | 0.48 |
| | | | | | |
| Forming Test ¹⁾ | #3 ²⁾ | #3 ²⁾ | #2 ²⁾ | #3 ²⁾ | #3 ²⁾ |
| | | | | | |
| Heat seal strength (g/20 mm) | - | - | - | 1530 | 2010 |

| | | | | | |
|---|---|---|---|---|---|
| Note: 1) By vacuum forming of blisters each having a diameter of 13 mm and a depth of 6 mm; visual evaluation by the following scheme 2): | | | | | |
| 2) #3: Bottom edge portions are sharp and very good forming is attained. #2: Bottom edge portions are somewhat rounded and good forming is attained. #1: Forming of bottom edge is impossible. | | | | | |

From Table 1, it is seen that all the sheet products of the Examples have superior processibility by vacuum forming, moistureproof property and transparency as compared with those of Comparative Example. The sheet products of the Examples exhibit a higher heat seal strength.

### Example 5

An extrusion laminated sheet having binary triple layers was produced by T-die co-extrusion in the same manner as in Example 4 except that a copolymer of ethylene/ETCD-3 having an intrinsic viscosity [η] of 0.67 dl/g and a softening tempeature (TMA) of 90 °C was employed instead of the copolymer of Example 4.

The physical properties, processibility by forming and interlayer bonding strength between the layer of the crystalline polypropylene resin mixture (B-e) and the layer of the non-crystalline copolymer of ethylene/ETCD-3 (A) were assessed by the procedures given below. The results are summarized in Table 2.

### Procedures for Assessments

1) Thickness of each layer:
   Determined by cutting the laminated sheet perpendicular to the sheet face and examining the section using a microscope.
2) Light permeability:
   Determined according to ASTM D 1003
3) Moisture permeation coefficient:
   Determined according to ASTM F 1249 at 40 °C and a relative humidity of 90 %.
4) Interlayer Bonding Quality:
   Assessed by crumpling the laminated sheet at its edge to examine occurence of separation of the laminate; a sample showing laminate separation is judged as unqualified
5) Continuous Processibility by Vacuum/Pneumatic Forming:
   Examined by cutting the laminated sheet into ribbons having a width of 10 mm and a length of 150 mm, maintaining the resulting ribbons at a gas atmosphere temperature of 80 °C for 1 minute and effecting a tensile test at a force of 1 kg/cm²; a ribbon exhibiting an elongation not exceeding 1 % is judged as qualified.

### Example 6

The procedures of Example 5 were repeated except that a polypropylene having a melt flow rate at 230 °C of 11.5 g/10 min., a density of 0.91 g/cm³, a degree of crystallinity determined by the X-ray diffraction method of 59 % and a thermal deformation temperature under a load of 4.6 kg/cm² of 110 °C and a polyethylene having a melt flow rate at 190 °C of 6.1 g/10 min., a density of 0.957 g/cm³ and a Vicat softening point of 115 °C were employed in a polypropylene/polyethylene weight ratio of 6:4, in the place of the crystalline polypropylene resin mixture (B-e) of Example 5. The results are also summarized in Table 2.

**Table 2**

| Parameter | Example 5 | Example 6 |
|---|---|---|
| Thicknes of each layer for layers B/A/B (µm) | 30/200/30 | 30/200/30 |
| | | |
| Light permeability (%) | 91 | 91 |
| | | |
| Moist. permeab. coef. (g/m² · 24 h) | 0.35 | 0.35 |
| | | |
| Interlayer bonding quality | Qualified | Qualified |
| | | |
| Continuous processibility | Qualified | Qualified |

From Table 2, it is seen that laminated sheet products of Example 5 and 6 exhibit better physical properties, showing that the interlayer bonding quality can be improved by co-extrusion lamination without deteriorating the light permeability, moisture permeability coefficient and continuous processibility.

## Claims

1. Use in the production of a PTP or blister packaging formed product having blisters thereon of a non-stretched sheet or film comprising a layer made of at least one non-crystalline polyolefin resin (A) selected from
(A-a) a random copolymer of ethylene and a cycloolefin of general formula (1) 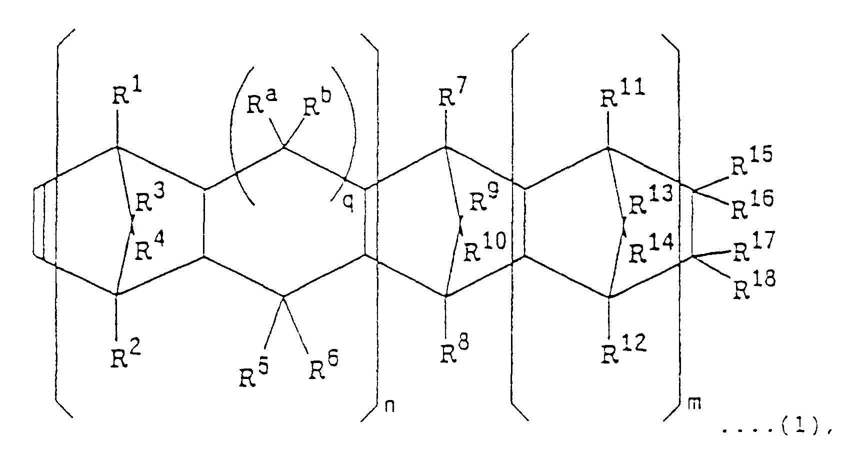 in which n is zero or 1, m is zero or a positive integer, q is zero (when a five-membered ring results) or 1, R¹ to R¹⁸, R^{a} and R^{b} each independently represent a hydrogen atom, a halogen atom or a hydrocarbon group; R¹⁵ to R¹⁸ may be linked to each other to form a monocyclic or polycyclic group which may have one or more double bond; and R¹⁵ and R¹⁶, or R¹⁷ and R¹⁸, may together form an alkylidene group, the random copolymer having an intrinsic viscosity [η] of 0.01 - 10 dl/g determined in decalin at 135°C and a softening temperature (TMA) of 50-200°C, and
(A-c) a graft-modified product of said random copolymer (A-a).

2. Use according to claim 1 wherein said layer comprising said at least one non-crystalline polyolefin resin (A) is laminated to a layer made of at least one crystalline polyolefin resin (B).

3. Use according to claim 2, wherein the laminate has a sandwich-like structure having the lamination sequence [layer of crystalline polyolefin resin (B)]/[layer of non-crystalline polyolefin resin (A)]/[layer of crystalline polyolefin resin (B)].

4. Use according to claim 2 or 3, wherein the crystalline polyolefin resin (B) is a crystalline polypropylene resin.

5. Use according to claim 4, wherein the laminate is formed by dry lamination by gluing the layer of non-crystalline polyolefin resin (A) and the layer(s) of crystalline polypropylene resin with an adhesive.

6. Use according to claim 2 or 3, wherein the crystalline polyolefin resin (B) comprises a resin mixture composed of a crystalline polypropylene resin and a polyethylene resin having a density of at least 0.930 g/cm³.

7. Use according to claim 6, wherein the lamination is effected by co-extruding a layer of the non-crystalline polyolefin resin (A) with a layer of the crystalline polypropylene resin mixture.

8. A PTP or blister package, comprising
(I) a formed product having blisters thereon prepared by forming a sheet or film comprising a layer made of at least one non-crystalline polyolefin resin (A) as defined in any one of the preceding claims and
(II) a sealing element for sealing the formed product containing in the cavities of the blisters the articles to be packaged.

9. A PTP or blister package according to claim 8, wherein the formed product has blisters for receiving each article to be packed and flange portions surrounding each of the blisters, said flange portions being bonded with the sealing element to provide tight sealing of the package.

10. A PTP or blister package according to claim 8 or 9, wherein the sealing element comprises an aluminum foil or a sheet or film comprising a layer made of at least one non-crystalline polyolefin resin(A) as defined in any one of claims 1 to 7.

11. A PTP or blister package according to claim 10 wherein the sealing element is made by laminating an aluminum foil or a supporting paper with a layer of a graft-modified product (A-c) as defined in claim 1.

12. A PTP or blister package according to claim 11, wherein the layer of the graft-modified product (A-c) of the sealing element is bonded to the flange portions of the formed product by heat sealing.

13. A method for packing articles in a PTP or blister package, comprising
placing each article to be packed in a cavity of a blister of a formed product having blisters and flange portions surrounding each blister and prepared by forming a sheet or film comprising a layer made of at least one non-crystalline polyolefin resin (A) as defined in any one of claims 1 to 7,
covering the formed product having articles accommodated in the blister cavities thereof with a sealing element and
bonding the flange portions of the formed product to the sealing element by heat sealing or by means of an adhesive to effect tight sealing of the package.

## Patentansprüche

1. Verwendung bei der Herstellung eines geformten PTP- oder Blisterverpackungs-Produkts mit Blistern darauf einer nicht gereckten Bahn oder Folie, umfassend eine Schicht aus mindestens einem nicht-kristallinen Polyolefinharz (A), gewählt aus
(A-a) einem statistischen Copolymer von Ethylen und einem Cycloolefin der allgemeinen Formel (1): 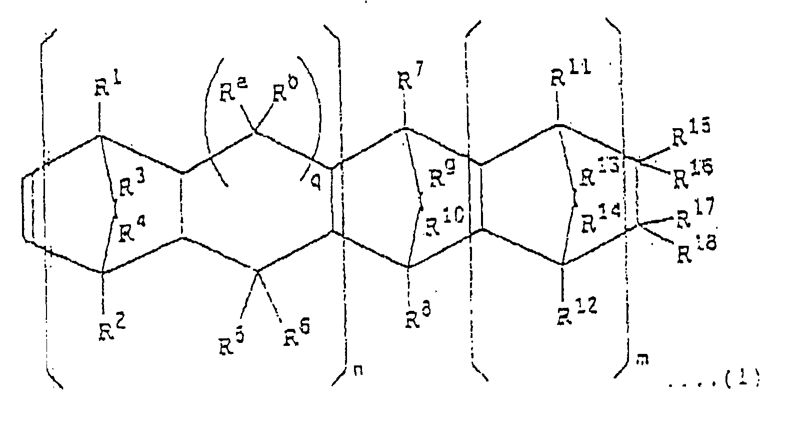 worin n null oder 1 ist; m null oder eine positive ganze Zahl ist; q null (wenn sich ein fünfgliedriger Ring ergibt) oder 1 ist; R¹ bis R¹⁸, R^{a} und R^{b} jeweils unabhängig ein Wasserstoffatom, ein Halogenatom oder eine Kohlenwasserstoffgruppe bedeuten; R¹⁵ bis R¹⁸ miteinander verbunden sein können unter Bildung einer monocyclischen oder polycyclischen Gruppe, die eine oder mehrere Doppelbindungen aufweisen kann; und R¹⁵ und R¹⁶, oder R¹⁷ und R¹⁸ zusammen eine Alkylidengruppe bilden können, wobei das statistische Copolymer eine Grundviskosität [η] von 0,01 - 10 dl/g, bestimmt in Decalin bei 135°C, und eine Erweichungstemperatur (TMA) von 50 - 200°C aufweist; und
(A-c) einem pfropf-modifizierten Produkt des statistischen Copolymers (A-a).

2. Verwendung nach Anspruch 1, wobei die Schicht, umfassend das mindestens eine nichtkristalline Polyolefinharz (A), mit einer Schicht laminiert ist, die aus mindestens einem kristallinen Polyolefinharz (B) hergestellt ist.

3. Verwendung nach Anspruch 2, wobei das Laminat eine sandwichartige Struktur aufweist mit der Laminierungsfolge [Schicht aus kristallinem Polyolefinharz (B)] / [Schicht aus nicht-kristallinem Polyolefinharz (A)] / [Schicht aus kristallinem Polyolefinharz (B)].

4. Verwendung nach Anspruch 2 oder 3, wobei das kristalline Polyolefinharz (B) ein kristallines Polypropylenharz ist.

5. Verwendung nach Anspruch 4. wobei das Laminat gebildet worden ist durch trockenes Laminieren durch Verkleben der Schicht aus nicht-kristallinem Polyolefinharz (A) und der Schicht(en) aus kristallinem Polypropylenharz mit einem Klebemittel.

6. Verwendung nach Anspruch 2 oder 3, wobei das kristalline Polyolefinharz (B) ein Harzgemisch umfasst, gebildet aus einem kristallinen Polypropylenharz und einem Polyethylenharz mit einer Dichte von mindestens 0,930 g/cm³.

7. Verwendung nach Anspruch 6, wobei die Laminierung erfolgt durch gemeinsames Extrudieren einer Schicht aus dem nicht-kristallinen Polyolefinharz (A) und einer Schicht aus dem kristallinen Polypropylenharzgemisch.

8. PTP- oder Blisterverpackung, umfassend
(I) ein geformtes Produkt mit Blistern darauf, hergestellt durch Bildung einer Bahn oder Folie, umfassend eine Schicht aus mindestens einem nicht-kristallinen Polyolefinharz (A), wie in einem der vorangehenden Ansprüche definiert, und
(II) ein Verschlusselement zum dichten Verschließen des gebildeten Produktes, das in den Hohlräumen der Blister die zu verpackenden Gegenstände enthält.

9. PTP- oder Blisterverpackung nach Anspruch 8, wobei das geformte Produkt Blister zur Aufnahme jedes zu verpackenden Gegenstandes und Flanschabschnitte, die jeden der Blister umgeben, aufweist, wobei die Flanschabschnitte mit dem Verschlusselement verbunden sind, um einen dichten Verschluss der Verpackung zu ergeben.

10. PTP- oder Blisterverpackung nach Anspruch 8 oder 9, wobei das Verschlusselement eine Aluminiumfolie oder eine Bahn oder Folie, umfassend eine Schicht aus mindestens einem nicht-kristallinen Polyolefinharz (A) nach einem der Ansprüche 1 bis 7, umfasst.

11. PTP- oder Blisterverpackung nach Anspruch 10, wobei das Verschlusselement hergestellt worden ist durch Laminieren einer Aluminiumfolie oder eines Trägerpapiers mit einer Schicht aus einem pfropf-modifizierten Produkt (A-c), wie in Anspruch 1 definiert.

12. PTP- oder Blisterverpackung nach Anspruch 11, wobei die Schicht aus pfropfmodifiziertem Produkt (A-c) des Verschlusselementes mit den Flanschabschnitten des geformten Produktes durch Heißversiegeln verbunden ist.

13. Verfahren zum Verpacken von Gegenständen in einer PTP- oder Blisterverpackung, umfassend
Einbringen jedes zu verpackenden Gegenstandes in einen Hohlraum eines Blisters eines geformten Produktes mit Blistern und Flanschabschnitten, die jeden Blister umgeben, das hergestellt worden ist durch Formen einer Bahn oder Folie, umfassend eine Schicht aus mindestens einem nicht-kristallinen Polyolefinharz (A), wie in einem der Ansprüche 1 bis 7 definiert,
Bedecken des geformten Produktes, das Gegenstände umfasst, die in die Blisterhohlräume davon eingepasst sind, mit einem Verschlusselement und
Verbinden der Flanschabschnitte des geformten Produktes mit dem Verschlusselement durch Heißversiegeln oder mit Hilfe eines Klebemittels, um einen dichten Verschluss der Verpackung zu bewirken.

## Revendications

1. Utilisation dans la production d'un produit formé pour emballage du type PTP ou blister, présentant des alvéoles, d'une feuille ou d'un film non étiré (e) comprenant une couche constituée d'au moins une résine de polyoléfine non cristalline (A), choisie parmi :
(A-a) les copolymères statistiques d'éthylène et de cyclooléfine de formule générale (1) 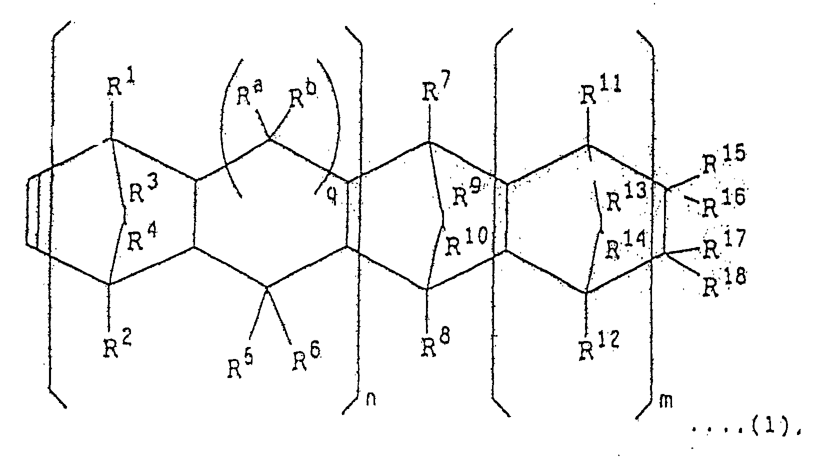 dans laquelle n est égal à 0 ou 1, m est égal à 0 ou représente un nombre entier positif, q est égal à 0 (dans le cas d'un cycle à cinq chaînons) ou 1, R¹ à R¹⁸, R^{a} et R^{b} représentent chacun indépendamment un atome d'hydrogène ou d'halogène ou un groupe hydrocarboné, R¹⁵ à R¹⁸ peuvent être liés les uns aux autres pour former un groupe monocyclique ou polycyclique, qui peut présenter une ou plusieurs doubles liaisons, et R¹⁵ et R¹⁶, ou bien R¹⁷ et R¹⁸, peuvent former ensemble un groupe alkylidène, les copolymères statistiques ayant une viscosité intrinsèque [η], déterminée dans la décaline à 135 °C, de 0,01-10 dl/g et une température de ramollissement, déterminée par analyse thermomécanique (ATM), de 50-200 °C, et
(A-c) les produits obtenus par modification par greffage desdits copolymères statistiques (A-a).

2. Utilisation selon la revendication 1, dans laquelle ladite couche comprenant ladite au moins une résine de polyoléfine non cristalline (A) est stratifiée avec une couche constituée d'au moins une résine de polyoléfine cristalline (B).

3. Utilisation selon la revendication 2, dans laquelle le stratifié a une structure de type sandwich, présentant la séquence de stratification suivante : couche de résine de polyoléfine cristalline (B) / couche de résine de polyoléfine non cristalline (A)/couche de résine de polyoléfine cristalline (B).

4. Utilisation selon la revendication 2 ou 3, dans laquelle la résine de polyoléfine cristalline (B) est une résine de polypropylène cristallin.

5. Utilisation selon la revendication 4, dans laquelle on forme le stratifié par stratification à sec, en collant la couche de résine de polyoléfine non cristalline (A) et la ou les couches de résine de polypropylène cristallin avec un adhésif.

6. Utilisation selon la revendication 2 ou 3, dans laquelle la résine de polyoléfine cristalline (B) renferme un mélange de résines constitué d'une résine de polypropylène cristallin et d'une résine de polyéthylène ayant une densité d'au moins 0,930 g/cm³.

7. Utilisation selon la revendication 6, dans laquelle on effectue la stratification en co-extrudant une couche de la résine de polyoléfine non cristalline (A) et une couche du mélange à base de résine de polypropylène cristallin.

8. Emballage du type PTP ou blister, qui comprend :
(I) un produit formé présentant des alvéoles, préparé par formage d'une feuille ou d'un film comprenant une couche constituée d'au moins une résine de polyoléfine non cristalline (A) telle que définie dans l'une quelconque des revendications précédentes, et
(II) un élément formant joint étanche, pour fermer le produit formé contenant dans les cavités des alvéoles les articles à emballer.

9. Emballage du type PTP ou blister selon la revendication 8, dans lequel le produit formé présente des alvéoles pour recevoir chaque article à emballer et des rebords entourant chacune des alvéoles, lesdits rebords étant liés à l'élément formant joint étanche de façon à ce que l'on obtienne une fermeture hermétique de l'emballage.

10. Emballage du type PTP ou blister selon la revendication 8 ou 9, dans lequel l'élément formant joint étanche comprend une feuille d'aluminium ou une feuille ou un film comprenant une couche constituée d'au moins une résine de polyoléfine non cristalline (A), telle que définie dans l'une quelconque des revendications 1 à 7.

11. Emballage du type PTP ou blister selon la revendication 10, dans lequel l'élément formant joint étanche est obtenu par stratification d'une feuille d'aluminium ou d'un papier support avec une couche d'un produit (A-c) obtenu par modification par greffage, tel que défini dans la revendication 1.

12. Emballage du type PTP ou blister selon la revendication 11, dans lequel la couche du produit (A-c) obtenu par modification par greffage, de l'élément formant joint étanche est liée aux rebords du produit formé par soudure à chaud.

13. Procédé pour emballer des articles dans un emballage du type PTP ou blister, qui comprend les étapes consistant à :
placer chaque article à emballer dans une cavité d'une alvéole d'un produit formé présentant des alvéoles et des rebords entourant chaque alvéole et préparé par formage d'une feuille ou d'un film comprenant une couche constituée d'au moins une résine de polyoléfine non cristalline (A) telle que définie dans l'une quelconque des revendications 1 à 7,
recouvrir d'un élément formant joint étanche le produit formé présentant des articles placés dans les cavités des alvéoles, et
lier les rebords du produit formé à l'élément formant joint étanche, par soudure à chaud ou au moyen d'un adhésif, pour réaliser une fermeture hermétique de l'emballage.
